# EUROPEAN PATENT APPLICATION

(11) **EP 4 835 744 A2**
(43) Date of publication of application: **04.11.2026**
(21) Application number: 26206232.6
(22) Date of filing: 06.06.2023
(51) Int. Cl.: G06N 3/098

(54) **METHOD AND PROCESSING SYSTEM FOR CONTROLLING A TRANSFER AND/OR A MODIFICATION OF MACHINE-READABLE DATA PROCESSED BY DEVICES OF AN AUTOMATION CONTROL SYSTEM, AND METHOD OF CONTROLLING AN INFRASTRUCTURE SYSTEM**

(62) Document number(s) of the earlier application(s) in accordance with Art. 76 EPC: 23177537.0 / 4 474 981
(71) Applicant: Hitachi Energy Ltd, 8050 Zürich (CH)
(72) Inventor: Rejiba, Zeineb, 8064 Zurich (CH); Deck, Bernhard, 79809 Weilheim (DE); Piatkowska, Ewa, 30-348 Krakow (PL); Ostoja-Gajewski, Michal, 30-129 Krakow (PL); Sipowicz, Jakub, 30-348 Krakow (PL); Dan, Andrei-Marian, 200480 Craiova (RO); Eidenbenz, Raphael, 8049 Zurich (CH)
(74) Representative: Meier, Florian

(57) **Abstract**

To control a transfer and/or a modification of machine-readable data processed by devices (41-46) of an automation control system (40), a processing system (60) determines at least one schedule for a transfer of the machine-readable data to the devices (41-46) and/or a modification of the devices (41-46) based on the machine-readable data. The processing system (60) controls the transfer and/or the modification in accordance with the determined at least one schedule.

## Description

### TECHNICAL FIELD

Embodiments of the invention relate to systems and methods operative to control a transfer and/or a modification of machine-readable data processed by devices of an automation control system. Embodiments of the invention relate in particular to scheduling methods and systems that can be used to determine a schedule for the transfer and/or the modification of the machine-readable data. Embodiments of the invention also relate to techniques of performing control actions related to an infrastructure system, such as an electric power system.

### BACKGROUND

Automation control systems are already widely used. Automation control systems provide improved control and operation of an infrastructure system (such as an electric power system) or an industrial system. Use of automation control systems is expected to further increase, in view of the capabilities provided by automation control systems and the devices thereof.

An automation control system typically comprises a plurality of devices. Each of the devices may be associated with a component of a primary system (such as an electric power system) to perform one or several functions, such as one or several protection functions. The devices may be communicatively coupled with each other and with one or several control systems.

It may be desirable to update machine-readable data processed by the devices after the devices of the automation control system have been configured and commissioned for field use and operate in field use. For illustration, it may be desirable to implement updates of machine-readable instruction code that may be processed by the devices to perform control, protection, and/or communication functions after the devices have started operating in field use.

Updates of machine-readable data for fleets of devices is an important functionality for future automation control systems (such as automation control systems for power grids or other infrastructure systems). Update processes ensure that the latest security patches, functionality and/or improved performance are deployed to the field devices in a timely and efficient manner. Further improvements in performing such updates automatically are desirable for various reasons. For illustration, it is desirable to perform such updates in a manner which enables the updates to be performed based on objective criteria, in a manner that reduces or eliminates errors caused by human experts, or in a manner that further enhances digitalization, and further reduces of cybersecurity risks.

US 8 892 699 B2 discloses a method of automatically updating an existing firmware file stored in a memory of an intelligent electronic device (IED) communicatively coupled to a network in a monitoring system, in which an update is performed in response to the IED verifying that a first criterion (such as interoperability of the update with the existing firmware file) is satisfied.

Techniques in which an automation control system device autonomously decides whether and when to perform an update may have shortcomings. For illustration, such an implementation of an update process may sometimes not adequately mitigate the risk of an automation control system device being prevented from, or inhibited in, performing its customary and intended function due to the transfer and/or installation of an update, at a time at which it is inappropriate for the automation control system device from being unavailable for its intended functionality. Such a conventional implementation may also not be adequate to take into consideration the overall functional state of several devices, potentially including a redundant system.

Thus, there is still a need for improved techniques of transferring machine-readable data (such as software or firmware updates) to automation control system devices and/or of controlling a modification of automation control system devices based on such transferred machine-readable data.

### SUMMARY

It is an object of the invention to provide methods, devices, and/or systems that provide enhanced techniques of distributing machine-readable data to devices of an automation control system and/or of modifying such devices based on distributed machine-readable data. It is an optional object of the invention to provide methods, devices, and/or systems that mitigate the risk of the distribution of machine-readable data and/or modification of devices of an automation control system being performed incorrectly or incompletely due to an incorrect timing. It is an optional object of the invention to provide methods, devices, and/or systems that mitigate the risk of the distribution of machine-readable data and/or modification of devices of an automation control system being performed incorrectly or incompletely due to errors caused by human scheduling.

According to exemplary embodiments, methods and systems as recited in the claims are provided.

According to an aspect of the invention, there is provided a method for controlling a transfer and/or a modification of machine-readable data processed by devices of an automation control system. The method comprises determining, by a processing system, at least one schedule for a transfer of the machine-readable data to the devices and/or a modification of the devices based on the machine-readable data. The method comprises controlling, by the processing system, the transfer and/or the modification in accordance with the determined at least one schedule.

Various effects and advantages are attained by the method. By determining the one or several schedules for transferring the machine-readable data to the devices and/or for modifying the devices based on the transferred machine-readable data, enhanced control is attained over the time at which the machine-readable data at transferred or used for modifying the devices. By determining the one or several schedules with the aid of a processing system, the determination can be performed based on objective criteria and is less prone to human error than techniques that rely on expert-based scheduling. By determining the one or several schedules by the processing system for several devices, are more holistic picture of the automation control system can be taken into consideration. Moreover, not only the state of the automation control system, but also the state of an industrial or infrastructure system with which the plurality of devices is associated can be taken into consideration when determining the one or several schedules.

The method may further comprise receiving infrastructure system data related to an infrastructure system with which the devices are associated. The at least one schedule may be determined based on the received infrastructure system data.

Thereby, the infrastructure system data and the state of the infrastructure system indicated by the infrastructure system data is taken into account when determining the one or more schedules. This enables the transfer of the machine-readable data and/or the modification of the devices (e.g., a firmware or software update) to be performed selectively with a timing that depends on the system state of the infrastructure system. In particular, the one or several schedules may be determined such that the transfer of the machine-readable data and/or the modification of the devices is performed at times at which the infrastructure system complies with stability criteria. For illustration, the transfer of the machine-readable data may be timed such, and the schedule therefor may be generated such, that it is unlikely for significant communication benefits to be required for exchanging time-critical messages, such as messages required for performing protection functions. For further illustration, the modification of the devices (e.g., a firmware or software update) may be timed such, and the schedule therefor may be determined such, that stability of the infrastructure system is not adversely affected by an update process performed by the devices. These respective timings may be determined individually for each of the devices, considering the state of other devices of the automation control system and of the infrastructure system.

The infrastructure system data may comprise generator unit commitment and/or electric load power data over a time period.

Thereby, the method is particularly amenable to being applied to automation control system devices associated with an electric power system, such as an electric power generation system, an electric power transmission system, an electric power distribution system, and/or stations or substations thereof. Moreover, techniques for forecasting future power systems states are well established, using generator unit commitment and/or load power as input for determining forecasts. Additional inputs such as weather forecasts may also be used, in particular when applying the method to determine one or several schedules for automation control system devices associated with an electric power system having renewables penetration. Thus, the techniques disclosed herein particularly lend themselves to being applied to electric power systems having renewable penetration, supporting their transition to greener and more environmentally friendly electric power systems.

The infrastructure system data may comprise observations obtained using measurement instrumentation.

Thereby, the method is operative to process system observations obtained in an infrastructure system, such as an electric power system, into schedules useful for transferring machine-readable data to a plurality of devices and/or modifying the devices. The observations, which are used as input for determining the one or several schedules, are thus processed by the processing system into control operations that affect field operation of the devices.

The processing system may obtain the observations from measurement instrumentation via merging units and/or gateways.

Thereby, communication techniques established in the field of industrial automation control (e.g., communication in accordance with IEC 61850) may be used by the processing system to obtain the observations.

The infrastructure system data may alternatively or additionally comprise messages related to operation of the devices.

Thereby, the operation state of the devices of the automation control system may additionally or alternatively be used as input by the processing system for processing system observations in an infrastructure system, such as an electric power system, into schedules for transferring machine-readable data to a plurality of devices and/or modifying the devices. The messages may indicate states of the infrastructure system, which may be retrieved by the processing system from the messages for use in determining the one or several schedules. Thus, information on the infrastructure system state and/or the automation control systems that may be processed by the processing system into the one or several schedules, which in turn are used for performing control operations that affect field operation of the devices of the automation control system. Such messages are also particularly useful for identifying criticality of an infrastructure system state.

The messages may comprise messages compatible with IEC 61850.

Thereby, communication techniques established in the field of industrial automation control (e.g., communication in accordance with IEC 61850) may be used by the processing system to obtain the messages from the devices of the automation control system.

The messages may comprise GOOSE messages.

Thereby, the processing system can obtain information related to potentially critical events in the infrastructure system from the GOOSE messages.

The method may further comprise determining, by the processing system, a criticality of each of the devices for operation of an infrastructure system with which the devices are associated.

Thereby, the processing system can infer, based on the infrastructure system information, whether any of the devices are a critical for infrastructure system operation in the sense that their full operability is indispensable to ensure that the infrastructure system components all stay within safe operation ranges.

The processing system may determine the at least one schedule based on a criticality of each of the devices for system operation.

Thereby, the at least one schedule can be determined in such a manner that it is insured that a device of the automation control system is not taken out of its fully operable state for performing, e.g., a software or firmware updates while that device is indispensable for safe infrastructure system operation.

Determining the criticality may comprise determining the criticality over a predictive time horizon.

Thereby, the processing system can take into account expected future developments within the infrastructure system for determining the at least one schedule. Predictive techniques are available to the skilled person in the field of infrastructure systems, and particularly in the field of electric power systems. Such predictive techniques may use techniques such as power flow, optimal power flow, or, more recently, artificial intelligence predictors to predict future generator levels and/or load powers. The predictive techniques may generally be based on historical observations. Thus, the predictions may be obtained in a data-driven manner.

Determining the at least one schedule may comprise determining whether there is a redundant system for at least some of the devices and whether the redundant system is operative.

Thereby, the redundant implementation of functions performed by the devices of the automation control system may be taken into consideration when determining the at least one schedule. This may comprise allowing a device that is determined to be critical for safe infrastructure system operation to be modified during a time period in which this device is critical, provided that there is a redundant implementation for one, several or all of the functions performed by this device. The at least one schedule may be generated accordingly by the processing system, to take into consideration both infrastructure system state, device criticality for safe infrastructure system operation, and the presence or absence of redundant implementations of their device function of functions.

The processing system may determine the criticality based on the infrastructure system data.

Thereby, the processing system can determine, for each of the devices, how relevant it is for safe operation of the infrastructure system, given the infrastructure system data. This can be done in various ways. For illustration, the processing system can determine how far components of the infrastructure system are from boundaries of their safe operation range. Devices associated with infrastructure system components which are well within their safe operation range (e.g., for which all operation parameters are separated from the boundaries of the safe operation range by at least a threshold margin) may be considered to be not critical, as temporary unavailability of such devices for performing the modification of the respective devices may be acceptable.

The method may further comprise receiving communication system data related to usage of one or several communication links of the plurality of devices, wherein the at least one schedule is determined based on the communication system data.

Thereby, the processing system can take into account conditions of communication links, such as bandwidth usage by the devices and/or available bandwidth of gateways or other infrastructure of a communication system, for determining the at least one schedule. The communication system data may be used by the processing system at least for determining the schedule for transferring their machine-readable data to the devices. The processing system may use the communication system data also for determining the schedule for modifying the devices based on the transferred machine-readable data. Thereby, communication system state may be taken into consideration when determining at which times the respective devices of the automation control system are to be modified based on the transferred machine-readable data.

The at least one schedule may be determined based on a digital twin. The digital twin may comprise a digital twin of the infrastructure system. The digital twin may comprise a digital twin of the automation control system. The digital twin may comprise a digital twin of a communication system by which the devices of the automation control system are communicatively coupled.

Thereby, techniques of digital twinning may be used for determining the at least one schedule. The digital twin may be used in addition to or usage of observations and/or messages of the automation control system, to thereby provide further enhanced robustness in scenarios in which the determination of the criticality based alone on the digital twin or based alone on the observations and/or messages may be inaccurate.

The processing system may execute the at least one digital twin or may be communicatively coupled to a computing system separate from the processing system which executes the at least one digital twin.

Thereby, versatility in implementing the digital twin is attained.

The processing system may execute a scheduler to determine the at least one schedule.

Thereby, the processing system is specifically set up, by hardware or software, to determine the at least one schedule.

The scheduler may be operative to receive information on the infrastructure system and/or on the devices of the automation control system as input. The scheduler may be operative to provide a timing for transferring the machine-readable data to each of the devices and/or for modifying each of the devices based on the transferred machine- readable data as output.

Thereby, the processing system is specifically set up, by hardware or software, to determine the at least one schedule.

Parameter values of the scheduler may be set based on historical data.

Thereby, the at least one schedule may be determined using data-driven techniques. The risk of inappropriate timing caused by human misjudgment is mitigated.

The method may further comprise adjusting the parameter values of the scheduler during field operation of the processing system.

Thereby, the scheduler can be improved in an ongoing manner during field operation of the processing system and the automation control system.

Adjusting the parameter values of the scheduler may comprise storing performance data related to the transfer of the machine-readable data and/or the modification of the devices in a system storage. The parameter values of the scheduler may be updated based on the performance data. The performance data may comprise observations relating to infrastructure system state and/or data related to the automation control system state during the modification of the devices. The performance data may comprise observations relating to the communication system via which the devices communicate. These data may be used for adjusting the parameter values of the scheduler.

Thereby, the operation of the scheduler may be enhanced in an ongoing manner during field operation of the processing system.

The parameter values of the scheduler may be adjusted based on reports on execution of the transfer and/or the modification.

Thereby, the operation of the scheduler may be enhanced in an ongoing manner during field operation of the processing system. The risk of the transfer of the machine-readable data and/or update interfering with safe operation of an infrastructure system is further reduced.

The scheduler may comprise at least one artificial intelligence (AI) model.

Thereby, tasks such as forecasting future conditions in the infrastructure system and/or in the automation control system may be performed with the aid of the AI model. This provides the additional effect that the relevant logic is set up in a data-driven manner, without having to rely on explicit knowledge of the potentially complex interplay of various variables within the infrastructure system and/or automation control system.

The at least one AI model may be trained based on the historical data.

Thereby, the relevant logics is set up in a data-driven manner, without having to rely on explicit knowledge of the potentially complex interplay of various variables within the infrastructure system and/or automation control system.

The at least one schedule may be determined based on an output of the at least one AI model.

Thereby, the capabilities of the trained AI model can be leveraged for determining the at least one schedule.

The AI model may have an input that receives time series of load power observations and generator unit commitment and may output a forecast of the future load and/or generator unit commitment. The method may comprise using, by the processing system, the forecast to determine the at least one schedule.

Thereby, predictive techniques may be used to determine the at least one schedule.

The AI model may have an input that receives a sequence of system events (also including the target devices' operational events) over time and may output a forecast of the future system events. The method may comprise using, by the processing system, the forecast to determine the at least one schedule.

Thereby, predictive techniques may be used to determine the at least one schedule.

The AI model may have an input that receives a time series of communication bandwidth usage by the devices and may output a forecast of the future bandwidth usage The method may comprise using, by the processing system, the forecast to determine the at least one schedule.

Thereby, predictive techniques may be used to determine the at least one schedule.

The method may further comprise updating, during field operation of the processing system, the trained AI model. The trained AI model may be updated based on reports on the transfer of the machine-readable data and/or the modification of the devices as observed in response to controlling the transfer and/or the modification.

Thereby, the trained AI model may be continually improved during field use of the at least one processing system.

The method may further comprise sharing, by the processing system, the parameters of the updated AI model with a federated server for performing federated machine learning.

Thereby, performance of the transfer and/or the modification of devices of various automation control systems under the control of the various processing systems may be aggregated to improve the AI model and, thus, ultimately the scheduling.

The method may comprise receiving, by the processing system, information on the further updates of the AI model determined by the federated server based on anonymized update information observed for various different automation control systems.

The method may further comprise performing, by a distribution server, the transfer of the machine-readable data to the plurality of devices in accordance with the determined schedule for the transfer. The machine-readable data may be transferred to each of the plurality of devices at a time determined in accordance with the schedule for the transfer.

Thereby, the transfer of the machine-readable data to the plurality of devices is implemented in accordance with the schedule that has been determined automatically by the processing system.

The method may further comprise processing, by the each of the plurality of devices, the transferred machine-readable data at a time determined in accordance with the determined schedule for the modification.

Thereby, the modification of the plurality of devices is implemented in accordance with the schedule that has been determined automatically by the processing system.

The method may comprise determining of the schedule for the transfer and the schedule for the modification.

Thereby, both the transfer of the machine-readable data and the modification of the plurality of devices based on the machine-readable data may be performed based on and in accordance with the schedules determined by the processing system.

The machine-readable data may comprise executable instruction code or an update of executable instruction code. The executable instruction code may be software or firmware persistently stored in the plurality of devices of the automation control system. Different types of devices may have stored therein different types of executable instruction code. The techniques disclosed herein are accordingly applicable to each of these different types of executable instruction code. I.e., not all of the plurality of devices need to receive the same machine-readable data.

Thereby, updates of firmware or software of devices of an automation control system may be performed in a coordinated manner, optionally also taking into account the past, present, and/or forecast future state of an infrastructure system with which the automation control system is associated.

The method may further comprise updating, by the devices, software or firmware executed by the devices based on the transmitted machine-readable data.

Thereby, the techniques may be applied to modifying device operation of automation control system devices by performing updates of software or firmware.

Updating the software or firmware may comprise updating at least one protection function logic related to an electric power system. The at least one protection function logic may comprise a distance protection or time-domain protection, without being limited thereto.

Thereby, the techniques may be applied to modifying a decision logic executed by the automation control system devices to perform protection functions related to an electric power system.

Transferring the machine-readable data may comprise transferring the machine-readable data over a packetized communication link or communication network. Alternatively or additionally, transferring the machine-readable data may comprise transferring the machine-readable data over communication links in accordance with IEC 61850.

Thereby, updates of firmware or software of devices of an automation control system may be performed in a coordinated manner, optionally also taking into account the past, present, and/or forecast future state of an infrastructure system with which the automation control system is associated.

Thereby, communication links or other communication infrastructure of intra- or inter-substation communication in accordance with IEC 61850 may be leveraged to transfer the machine-readable data to the plurality of devices.

The plurality of devices may comprise protection relays or other intelligent electronic devices (IEDs) that perform protection functions or other functions for an infrastructure system, in particular an electric power system.

Thereby, updates of such protection devices, which are particularly critical to ensure safe operation of an electric power system, may be performed in a manner which mitigates the risk of the update being performed at a time which is inappropriate in view of electric power system safety.

The plurality of devices may comprise distance protection devices and/or time domain protection devices.

Thereby, updates of such protection devices, which are particularly critical to ensure safe operation of an electric power system, may be performed in a manner which mitigates the risk of the update being performed at a time which is inappropriate in view of electric power system safety.

Controlling the transfer in accordance with a transfer schedule of the at least one schedule may comprise controlling, by the processing system, a distribution system for the machine-readable data.

Thereby, the determination of the schedule may be performed by a processing system distinct from the one that performs the actual distribution of the machine-readable data. This may be beneficial for privacy reasons, for example in order to avoid sharing data related to infrastructure system operation with the provider of the machine-readable data.

Controlling the modification in accordance with a modification schedule of the at least one schedule may comprise providing, for each of the devices, information based on the modification schedule which indicates a time at which the modification is to be performed.

Thereby, the processing system can determine the time of the modification based on all information available to it, allowing the modification to be timed such that critical devices that do not have a redundant function implementation remain available to ensure safety of the infrastructure system.

The method may further comprise checking, by at least one of the devices, whether a time indicated by the processing system is reached and triggering the modification responsive thereto.

Thereby, the processing system can control the time of the modification of any of the devices based on all information available to it.

The method may further comprise performing, by the devices, the modification at a time in accordance with a timing information received from the processing system.

Thereby, the processing system can control the time of the modification of any of the devices based on all information available to it.

The processing system and the devices of the automation control system may retrieve a reference time from a source clock. The source clock may be a source clock operative in accordance with the precision time protocol, PTP, without being limited thereto. The processing system and the devices may be synchronized with the source clock in accordance with the PTP (IEEE 1588).

Thereby, consistent timing in accordance with the requirements of an automation control system is attained. Moreover, automation control systems for infrastructure systems, in particular critical infrastructure systems, are to be aligned with a precise source clock to accommodate the high requirements on automation control for critical infrastructure systems. Thus, this source clock may also be used for the process of modifying the devices and, optionally, transferring the machine-readable data to the devices.

A method of controlling operation of an automation control system comprising a plurality of devices according to an embodiment comprises executing, by the devices of an automation control system, instruction code to perform functions related to an infrastructure system, and performing the method of controlling the transfer and/or the modification of machine-readable data according to any aspect or embodiment to update the devices of the automation control system during field use of the automation control system.

Thereby, the risk of the automation control system update process interfering in an undesirable manner with safe operation of the infrastructure system is mitigated. Operation safety of the infrastructure system is enhanced.

A method of controlling an infrastructure system according to an embodiment comprises controlling, by devices of an automation control system, equipment of the infrastructure system, and performing the method of controlling the transfer and/or the modification of machine-readable data according to any aspect or embodiment to update the devices of the automation control system during field use of the automation control system.

Thereby, the risk of the automation control system update process interfering in an undesirable manner with safe operation of the infrastructure system is mitigated. Operation safety of the infrastructure system is enhanced.

The infrastructure system may comprise an electric power system.

Thereby, the risk of the automation control system update process interfering in an undesirable manner with safe operation of the electric power system is mitigated. Operation safety of the electric power system is enhanced.

The electric power system may comprise one or several of the power generation system, a power transmission system, a power distribution system. The electric power system may comprise renewable energy resources coupled to at least some buses of an electric power grid.

Thereby, operation safety is enhanced for the electric power system.

According to another aspect of the invention, there is provided instruction code which, when executed by at least one processing circuit, causes execution of the method according to any one aspect or embodiment.

The effects attained thereby correspond to the effects and advantages disclosed in association with the method.

According to another aspect of the invention, there is provided a non-transitory storage medium having stored thereon instructions which, when executed by at least one processing circuit, causes execution of the method according to an aspect or embodiment.

The effects attained thereby correspond to the effects and advantages disclosed in association with the method.

According to another aspect of the invention, there is provided a processing system operative to control a transfer and/or a modification of machine-readable data processed by devices of an automation control system. The processing system comprises at least one interface. The processing system comprises at least one processing circuit operative to determine at least one schedule for a transfer of the machine-readable data to the devices and/or a modification of device operation based on the machine-readable data; and control, via the interface, the transfer and/or the modification in accordance with the determined at least one schedule.

Various effects and advantages are attained by the processing system. The processing system determines the one or several schedules for transferring the machine-readable data to the devices and/or for modifying the devices based on the transferred machine-readable data, enhanced control is attained over the time at which the machine-readable data at transferred or used for modifying the devices. The processing system can determine the one or several schedules based on objective criteria and is less prone to human error than techniques that rely on expert-based scheduling. By determining the one or several schedules for several devices, the processing system can take into consideration a more holistic picture of the automation control system when determining the times of transfer for each of the devices and/or the times of modification of each of the devices. Moreover, not only the state of the automation control system, but also the state of an industrial or infrastructure system with which the plurality of devices is associated can be taken into consideration when determining the one or several schedules.

According to another aspect of the invention, there is provided a system comprising the processing system and an automation control system. The automation control system comprises a plurality of devices. The processing system is operative to determine the at least one schedule for a transfer and/or modification of the devices. The processing system is operative to cause the machine-readable data to be transferred to the devices in accordance with a schedule for the transfer and/or to cause a modification of the devices in accordance with a schedule for the modification.

Thereby, the system attains the advantages and effects disclosed in association with the processing system and methods according to various embodiments.

The system may further comprise a communication system by which the devices of the automation control system are communicatively coupled. The processing system may be interfaced with the devices by other communication system. The processing system may be operative to determine the schedule for the transfer based on a bandwidth usage within the communication system, optionally based on a bandwidth usage by each of the devices.

Thereby, the transfer schedule may be determined in such a manner that there is no risk of consuming communication benefits at times at which they are required for other purposes.

The communication system may comprise a communication system operative in accordance with IEC 61850.

Thereby, the high requirements imposed on automation control systems associated with a critical infrastructure system are insured with regard to the implementation of the communication.

The processing system may be operative to determine the schedule for the transfer further based on a condition of an infrastructure system with which the devices of the automation control system are associated. The processing system may be operative to forecast future communication bandwidths required for performing protection and/or other control functions by the devices of the automation control system, and to determine the schedule for the transfer based on future communication benefits that have been forecast taking into consideration the infrastructure system state.

Thereby, the schedule for the transfer may be determined taking into consideration not only the state of the communication system, but also the infrastructure system state which may have a significant bearing on the expected future communication bandwidth requirements.

The system may further comprise an infrastructure system. The devices of the automation control system may be associated with the infrastructure system. The devices of the automation control system may perform protection and/or other control functions associated with primary equipment of the infrastructure system (such as primary components of an electric power grid).

Thereby, the effects and advantages attained by the techniques disclosed herein are leveraged for an automation control system of an infrastructure system.

The automation control system may be operative to control primary system components of the infrastructure system.

Thereby, the effects and advantages attained by the techniques disclosed herein are leveraged for providing enhanced control and operation of an infrastructure system.

The infrastructure system may comprise an electric power system, such as a portion of an electric power grid. For illustration, the infrastructure system may comprise an electric power transmission system and/or an electric power distribution system and/or an electric power generation system.

Thereby, the techniques disclosed herein and the effects and advantages are attained thereby are leveraged for improving operation of an infrastructure system that is an electric power system, an example for a critical infrastructure system.

The system may further comprise a source clock. The processing system may be operative to determine the at least one schedule with reference to a time provided by the source clock. The devices of the automation control system and/or a distribution system for the machine-readable code may be operative to determine a time at which the devices are modified and/or the machine-readable code is distributed with reference to the time provided by the source clock.

Thereby, consistency with regard to a reference time, relative to which the at least one schedule is determined and implemented, is insured.

Further embodiments are provided by the following list of numbered embodiments:
Embodiment 1: A method for controlling a transfer and/or a modification of machine-readable data processed by devices of an automation control system, the method comprising: determining, by a processing system, at least one schedule for one or both of: a transfer of the machine-readable data to the devices, a modification of the devices based on the machine-readable data; and controlling, by the processing system, the transfer and/or the modification in accordance with the determined at least one schedule.
Embodiment 2: The method of embodiment 1, further comprising receiving infrastructure system data related to an infrastructure system with which the devices are associated, wherein the at least one schedule is determined based on the received infrastructure system data.
Embodiment 3: The method of embodiment 2, wherein the infrastructure system data comprises generator unit commitment and/or electric load power data over a time period.
Embodiment 4: The method of embodiment 2 or embodiment 3, wherein the infrastructure system data comprise one or both of: observations obtained using measurement instrumentation, messages related to operation of the devices, optionally wherein the messages comprise messages compatible with IEC 61850 or optionally wherein the messages comprise GOOSE messages.
Embodiment 5: The method of any one of embodiments, further comprising determining, by the processing system, a criticality of each of the devices for operation of an infrastructure system with which the devices are associated, wherein the processing system determines the at least one schedule based on a criticality of each of the devices for system operation.
Embodiment 6: The method of embodiment 5, wherein determining the criticality comprises determining the criticality over a predictive time horizon.
Embodiment 7: The method of embodiment 5 or embodiment 6, wherein determining the at least one schedule comprises determining whether there is a redundant system for at least some of the devices and whether the redundant system is operative.
Embodiment 8: The method of any one of embodiments 5 to 7 when dependent on any one of embodiments 2 to 4, wherein the processing system determines the criticality based on the infrastructure system data.
Embodiment 9: The method of any one of the preceding embodiments, further comprising receiving communication system data related to usage of one or several communication links of the plurality of devices, wherein the at least one schedule is determined based on the communication system data.
Embodiment 10: The method of any one of the preceding embodiments, wherein the at least one schedule is determined based on a digital twin.
Embodiment 11: The method of any one of the preceding embodiments, wherein the processing system executes a scheduler to determine the at least one schedule, wherein parameter values of the scheduler are set based on historical data.
Embodiment 12: The method of embodiment 11, further comprising adjusting the parameter values of the scheduler during field operation of the processing system, wherein the parameter values of the scheduler are adjusted based on reports on execution of the transfer and/or the modification.
Embodiment 13: The method of embodiment 11 or embodiment 12, wherein the scheduler comprises at least one artificial intelligence, AI, model, wherein the at least one AI model is trained based on the historical data, wherein the at least one schedule is determined based on an output of the at least one AI model.
Embodiment 14: A method of controlling an infrastructure system, the method comprising: controlling, by devices of an automation control system, equipment of the infrastructure system ; and performing the method of any one of the preceding embodiments for controlling the transfer and/or the modification of machine-readable data processed by devices .
Embodiment 15: A processing system operative to control a transfer and/or a modification of machine-readable data processed by devices of an automation control system, the processing system comprising: at least one interface; and at least one processing circuit operative to determine at least one schedule for a transfer of the machine-readable data to the devices and/or a modification of device operation based on the machine-readable data; and control, via the interface, the transfer and/or the modification in accordance with the determined at least one schedule.

Various effects and advantages are attained by embodiments of the invention. For illustration, the systems and methods according to embodiments provide enhanced techniques of distributing machine-readable data to devices of an automation control system and/or of modifying such devices based on distributed machine-readable data. The methods, devices, and/or systems mitigate the risk of the distribution of machine-readable data and/or modification of devices of an automation control system being performed incorrectly or incompletely due to an incorrect timing. The methods, devices, and/or systems mitigate the risk of the distribution of machine-readable data and/or modification of devices of an automation control system being performed incorrectly or incompletely due to errors caused by human scheduling.

The systems and methods can be used in association with an electric power grid or sub-systems thereof, such as a power system substation.

### BRIEF DESCRIPTION OF THE DRAWINGS

Embodiments of the invention will be described with reference to the drawings in which similar or identical reference signs designate elements with similar or identical configuration and/or function.
Figure 1 is a schematic diagram of a system comprising a processing system operative to determine schedule(s).
Figure 2 is a block diagram of the processing system.
Figure 3 is a block diagram of an automation control system device.
Figure 4 is a block diagram of a processing circuit of the processing system.
Figure 5 is a flow chart of a method.
Figure 6 is a flow chart of a method.
Figure 7 is a schematic representation of load and generator unit levels.
Figure 8 is a block diagram of a processing circuit of the processing system.
Figure 9 is a block diagram of a processing circuit of the processing system.
Figure 10 is a block diagram of a processing circuit of the processing system.
Figure 11 is a diagram of a unit of an artificial intelligence model that may be used by the processing system.
Figure 12 is a block diagram of a system.
Figure 13 is a block diagram of a system.
Figure 14 is a block diagram of a system.
Figure 15 is a block diagram of a system.
Figure 16 is a block diagram of a processing circuit of the processing system.
Figure 17 is a flow chart of a method.
Figure 18 is a signaling diagram of a system.
Figure 19 is a schematic diagram of a system comprising a processing system operative to determine schedule(s).
Figure 20 is a flow chart of a method.

### DETAILED DESCRIPTION OF EMBODIMENTS

Embodiments of the invention will be described with reference to the drawings. In the drawings, similar or identical reference signs designate elements with similar or identical configuration and/or function.

Embodiments relate to processing systems and methods capable of determining and controlling the distribution of machine-readable data and/or the modification of devices of an automation control system based thereon.

While embodiments will be described in detail primarily in association with automation control systems for electric power systems, the embodiments disclosed herein are not limited thereto. The embodiments may be operative to determine schedule(s) for transferring machine-readable data to devices and/or modifying the devices based thereon for a wide variety of different automation control systems.

While embodiments will be described in detail in which the machine-readable data is an update of software or firmware of the devices, the embodiments may also be applied to other types of data.

Processing methods and systems disclosed herein are operative to determine at least one schedule for distributing machine-readable data and/or for modifying devices based thereon. As used herein, the terms "schedule" encompasses any information that defines at which time the transfer and/or modification is to be performed for each of the devices. Various devices may be logically grouped together, in which case the timing information may be determined for a set of devices in a group.

The schedule(s) may be determined with reference to a time defined by a source clock. The source clock may be any source clock capable of defining a common time reference for the devices of the automation control system, the processing system that determines the schedule(s) and, if present, a fleet management (FLM) system and/or data distribution system. Times may be aligned between the processing system, the devices and the source clock in accordance with IEEE 1588 (in particular the version of IEEE 1588 as in force on the priority or filing date of this application).

As used herein, an automation control system encompasses an automation control system that operates in a manner compatible with or in accordance with IEC 62443 (in particular the version of IEC 62443 as in force on the priority or filing date of this application).

As used herein, the devices of an automation control system may in particular comprise intelligent electronic devices (IEDs), such as IEDs operative in accordance with IEC 61850 (in particular the version of IEC 61850 as in force on the priority or filing date of this application).

As used herein, terms such as "modifying" or "modification" of the devices encompass a device modification by way of update of software or firmware code executed by the devices. The modification may affect the control logics executed by the device(s) to perform protection or other functions, and/or may affect other operational aspects of the device(s), such as cybersecurity-related function(s).

The devices of the automation and control system may be operative to process measurements captured using measurement instrumentation and perform one or several protection or other control functions. Examples for such devices comprise - in the context of electric power systems - protection relays. The devices may comprise at least some devices operative to trigger or otherwise operate primary equipment (such as switchgear) of an infrastructure system.

As used herein, the term "infrastructure system" encompasses a critical infrastructure system, such as an electric power generation, transmission, and/or distribution system, e.g., an electric power grid or parts thereof. Other examples of such infrastructure systems include fresh water supply or gas or oil storage, transmission, and/or distribution systems.

As used herein, the term "power grid" encompasses a power transmission grid and/or a power distribution grid. The power grid may comprise both a power transmission grid and a power distribution grid.

As used herein, the term "power" refers to electric power unless explicitly stated otherwise.

The techniques disclosed herein are operable to mitigate the risk that a device of the automation control system is taken out of its fully operational state for being modified at a time at which it is critical for safe operation of a primary system with which the automation control system is associated. As used herein, the term "critical" or "criticality" of a device refers to the device being required, for the respective state of the primary system, to ensure safe operation of the primary system.

The invention provides methods and systems for controlling a transfer and/or a modification of machine-readable data processed by devices of an automation control system. A processing system determines a schedule for a transfer of the machine-readable data to the devices and/or a modification of the devices based on the machine-readable data. The processing system controls the transfer and/or the modification in accordance with the determined at least one schedule.

Embodiments of the invention thereby address the need for improved techniques of timing the transfer of machine-readable data and/or the modification of the devices of the automation control system.

According to methods and processing systems of the invention, a processing system is operative to automatically schedule a distribution of machine-readable data and modification of devices of an automation control system (i.e., the modification of the device(s) based on the distributed machine-readable data) for machine-readable data.

In the method and processing system, the processing system may be a FLM system or may comprise a FLM system.

In the method and processing system, the machine-readable data may comprise software update and/or firmware update data for updating executable instruction code executed by the devices of an automation control system.

In the method and processing system, the processing system may be operative to optimize the schedule according to the historic data.

In the method and processing system, the processing system may be operative to optimize and adapt the distribution and update process depending on observed data about the system, device, and communication network status.

In the method and processing system, the processing system may be operative to reschedule the update process if unforeseen limitations occur on the device or (automation control and/or primary) system level.

In the method and processing system, the processing system may be operative such that the update process is occupying only a certain bandwidth of the network.

In the method and processing system, the processing system may be operative such that a software distribution engine plans, in combination with analytics, the update of the distributed machine-readable data at the site of installation of the devices, considering the criticality of the system to be updated. The processing system may apply a zone concept to this end.

In the method and processing system, the processing system may be operative to schedule a start of the update process after considering the criticality of the device in the complete automation control system and associated primary system, in combination with a redundant implementation of the automation control system device(s).

In the method and processing system, the processing system may be operative to consider precedence constraints across devices.

In the method and processing system, the processing system may be operative to consider data retrieved from digital twin-based simulations.

In the method and processing system, the processing system may be operative to predict a failure probability of applying a given update on a given device based on historical data of similar updates on similar device types.

In the method and processing system, the processing system may be operative to predict a resource consumption of an update based on past tests, historical data, and update metadata. In the method and processing system, the processing system may be operative to identify and recommend or automatically deploy an optimum version of the machine-readable data to assign to each device.

In the method and processing system, the processing system may be operative to detect anomalies based on observability data.

In the method and processing system, the processing system may be operative to identify root causes of update failures, using, e.g., clustering techniques (such as clustering based on device characteristics, behavioral metrics, and firmware or software versions).

In the method and processing system, the processing system may be operative to build one or several machine learning (ML) models based on data from a control system of the automation control system.

In the method and processing system, the processing system may be operative to improve a learned ML model based on anonymized data retrieved from fleets of devices of automation control systems which may be operated by other operators.

In the method and processing system, the processing system may be operative to act as a centralized distributor of the machine-readable data.

In the method and processing system, the processing system may be operative to allow Peer-to-Peer (P2P) distribution of the machine-readable data. In the latter case, the processing system can decide the best devices to use as seeds based on data from the automation control system and/or the primary system (e.g., an infrastructure system).

For remote environments or environments which are disconnected from the centralized fleet management system, devices can learn from each other the best distribution and update strategy taking a set of common goals into account (e.g., balanced bandwidth utilization, minimizing impact on availability).

Various effects and advantages are attained by embodiments of the invention. For illustration, the systems and methods according to embodiments provide enhanced techniques of distributing machine-readable data to devices of an automation control system and/or of modifying such devices based on distributed machine-readable data.

The systems and methods disclosed herein may be applied to a fleet of devices of a primary system (e.g., power grid) operator or a sub-portion thereof.

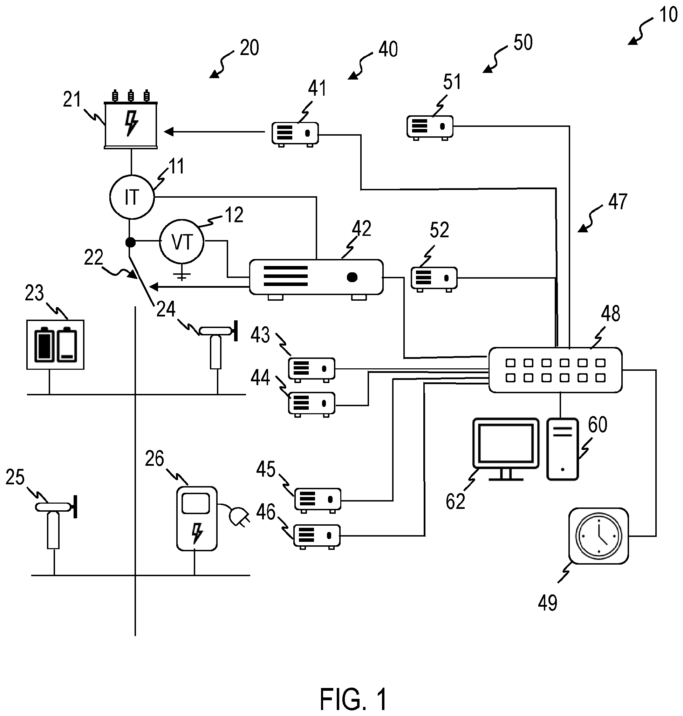

Figure 1 is a schematic representation of a system 10 according to an embodiment. The system 10 comprises a primary system 20. The primary system 20 may be or may comprise an electric power system, such as an electric power generation, transmission, and/or distribution system. The primary system 20 may comprise at least part of an electric power grid.

The system 10 comprises an automation control system 40. The automation control system 40 comprises a plurality of devices 41 to 46. At least some of the devices of the automation control system 40 are operative to perform protection functions or other functions that involve a control of components of the primary system 20, such as switchgear 20 to or a transformer 21. At least some of the devices of the automation control system 40 may be operative to execute a decision logic based on measurements, such as measurements received from measurement instrumentation, which may include a current transformer 11, in voltage transformer 12, and/or phasor measurement units. Examples for devices of the automation control system comprise protection relays or other IEDs which may be operative to perform distance protection or time protection or other protection functions.

The system 10 comprises a redundancy system 50 which provides redundant implementations for at least some of the functions performed by the devices of the automation control system 40. The redundancy system 50 may be implemented in various ways. For illustration, there may be a dedicated redundant device associated with 1 of the devices of the automation control system 40 in a one-to-one-correspondence. Other implementations are possible. For illustration, the may be a centralized redundancy system which may be provided at the substation level and which may provide redundancy for functions performed by several devices of the substation automation (SA) system.

The system 10 comprises a communication system 47. The communication system 47 may be a communication network. The communication system 47 may comprise a plurality of communication links by which devices of the automation control system 40 communicate with each other and/or with central control systems. Communication may be performed using communication devices such as gateway devices 48.

As will be described in more detail below, the system 10 comprises a processing system 60. The processing system 60 is operative to determine a schedule according to which machine-readable data is to be transferred to the devices of the automation control system 40 (and optionally also to the redundant implementations). Alternatively or additionally, the processing system 60 is operative to determine a schedule according to which the various devices of the automation control system 40 are modified based on the transferred machine-readable data. The times of the transfer and of the modification for each of the devices may generally be independent of each other, with the constraint that the modification is to occur after the transfer.

The processing system 60 is operative to control the transfer and/or the modification based on the determined schedule or schedules. The processing system 60 may be communicatively interfaced with other components, such as a data distribution system or a fleet management system for the devices of the automation control system 40, to control the transfer and/or the modification based on the determined at least one schedule.

To ensure a consistent timing reference to be used both by the devices of the automation control system 40 and the processing system 60 and, if present, the data distribution system or the fleet management system, the determination of the schedule and the implementation of the transfer and/or the modification may be performed in accordance with a time provided by a source clock 49. The source clock 49 may be the source clock used by the devices of the automation control system 40 in the normal field operation, i.e., to perform protection or other functions. The source clock 49 may be operative in accordance with the precision time protocol IEEE 1588.

As will be described in more detail below, the processing system 60 is generally operative to determine the at least one schedule in accordance with a system state. The system state may comprise a state of the primary system 20, of the automation control system 40, of the redundancy system 50, and of the communication system 47. Not all of this information may be required for each of the schedules.

For illustration, the processing system 60 may be operative to determine a time at which a device modified based on the received machine-readable data based on the criticality of the respective device for safe operation of the primary system 20. The criticality may be evaluated based on at least: the state of the primary system 20 (e.g., how far all or parameters of the primary system 20 are from boundaries of safe operation ranges); the state of the automation control system 40 (e.g., availability of devices in a proximity to the device that is to be modified or expected forthcoming availability requirements for the device that is to be modified); and the state of the redundancy system 50 (e.g., the availability of a redundant implementation for any device function that is critical to ensure safe operation of the primary system 20).

For further illustration, the processing system 60 may be operative to determine a time at which machine-readable data is to be transferred to one, several or all of the devices of the automation control system 40 based on available bandwidth in the communication system 47 and a bandwidth usage by the devices of the automation control system 40. For illustration, the available bandwidth may be evaluated based on current bandwidth usage in the communication system 47. Future bandwidth consumption may be predicted taking into consideration the state of the primary system 20 and/or of the automation control system 40.

The one or several schedules may be applied to control executed by the devices of the automation control system 40. The control of the transfer may be performed by the processing system 60 distributing the machine-readable data in accordance with the transfer schedule. Alternatively or additionally, the control of the transfer may be performed in that the processing system 60 controls a data distribution system separate from the processing system 60. For illustration, the data distribution system may be a system provided by a manufacturer of the devices of the automation control system 40 that are to be updated. The processing system 60 may be a system operated by the operator of the primary system 20.

The control of the modification of the devices may be performed in that the processing system 60 provides, for each of the devices that is to be updated, information on a time at which the update is to be performed. For illustration, a trigger time may be provided as metadata in the machine-readable data. The device of the automation control system 40 may then determine, based on a time provided by the source clock 49, at which time the update process is to be triggered.

By using a processing system 60 that determines the schedules for the transfer and/or modification of the devices based on the machine-readable data, it is possible to coordinate the update process of various devices based on, e.g., the availability of adjacent devices and/or the criticality of the devices of the automation control system 40 to ensure safe operation of the primary system 20.

As noted above, a field of application of the techniques disclosed herein is automation control systems for a primary system 20 that is or comprises an electric power system, such as a power grid or a sub- portion thereof. For illustration, and as schematically indicated in Figure 1, the electric power system may comprise primary components such as a power transformer 21, switchgear 22 (such as a circuit breaker or switch), renewable energy resources 24, 25 which may be coupled to buses of the electric power system buyer inverters, an energy storage systems such as a battery energy storage systems 23, or a time coupling equipment such as a charging stations 26.

However, the techniques disclosed herein are not limited to electric power systems but may also be applied to automation control systems used with other infrastructure systems, such as hydraulic or pneumatic systems. The techniques disclosed herein may also be used in association with industrial automation control.

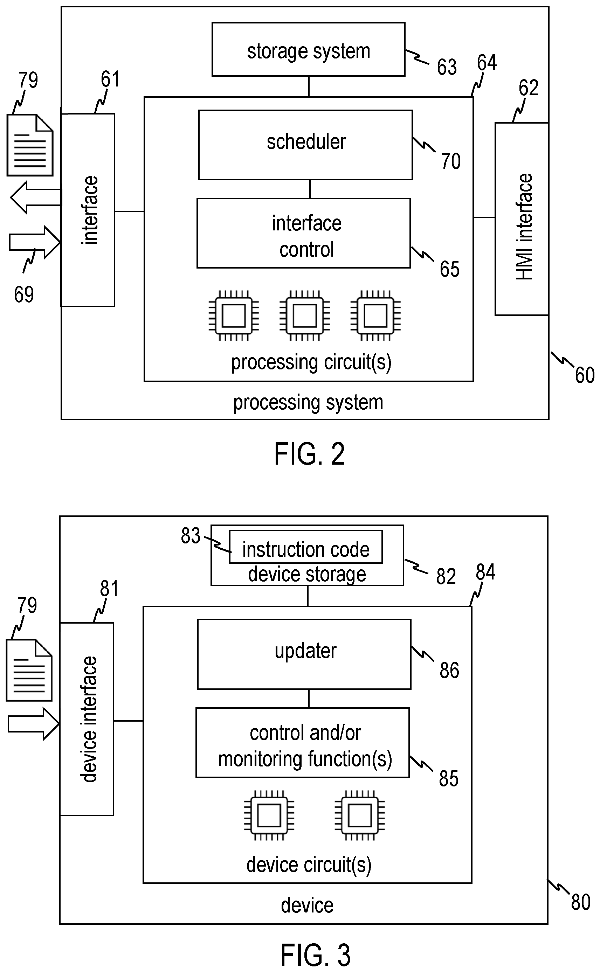

Figure 2 shows a block diagram representation of the processing system 60. The processing system 60 comprises an interface 61. The interface 61 may be operative to receive input which may comprise measurements or other status data related to one, several, or all of: the primary system 20, the automation control system 40, the communication system 47, the redundancy system 50. The interface 61 may be operative to output the at least one determined schedule or to otherwise generate output 79 in dependence on the determined at least one schedule.

The processing system 60 may optionally comprise a human machine interface (HMI) 62. The processing system 60 may be operative such that information generated based on the determined at least one schedule is output via the HMI 62.

The processing system 60 may comprise a storage system 63. The storage system 63 may have stored therein historical data and/or parameters for at least one processing logic executed by the processing system 60 to determine the at least one schedule. As will be explained in more detail below, the storage system 63 may have stored therein parameters and, optionally, hyperparameters of the at least one trained ML model that is operative for use in determining the at least one schedule.

The processing system 60 comprises one or several processing circuits 64. The one or several processing circuits 64 are operative to execute at least one scheduler 70 to determine, based on the input 69, the at least one schedule. Various techniques may be used by the scheduler 70 to determine the at least one schedule. The scheduler 70 may be operative to consider a historic, current, and/or forecasted future state of at least the primary system 20 to determine a schedule for transferring the machine-readable data and/or a schedule for modifying the devices.

For illustration, the scheduler 70 may be operative to process a time series of generator unit commitments and load data to forecast generator unit commitment and load power over a predictive time horizon. Based on the forecast generator unit commitment and load power, the scheduler 70 may determine times for modifying the various devices in such a manner that the modification (e.g., a software or firmware update) is performed within a time interval at which the generator unit commitment and load power as forecast over the predictive time horizon indicate that the respective device may be taken out of its normal fully operational state without compromising operation safety of the primary system 20.

The scheduler 70 may be operative to use at least one trained ML model to perform the forecast. Corresponding techniques of processing a time series of observations into time series of forecast values are available to the skilled person. For illustration, recurrent neural network structures may be used. The ML model may comprise one or several units, such as a long short term memory (LSTM) cells, to process the timeseries of observations into time series of forecast values of generator unit commitment and/or load powers.

The one or several processing circuits 64 may be operative to execute an interface control 65 responsive to the at least one schedule. The interface control 65 may be operative to control the interface 61 based on the determined at least one schedule. As noted above, this may be done in various ways to ensure that the transfer of the machine-readable data and/or the modification of the devices is performed in accordance with the at least one schedule. In one implementation, the processing system 60 may output the machine-readable data via the interface 61 at a timing that is set based on the schedule for the transfer. Alternatively or additionally, the processing system 60 may be operative such that the interface control 65 inserts time information indicating a trigger time for performing a modification (e.g., software or firmware update) of the device or devices the respective machine-readable data is directed.

The at least one processing circuit 64 may be operative to store reports on performance of the transfer and/or the device modification in the system storage 63 for future use. For illustration, the scheduler 70 may be updated in an ongoing manner during field use of the processing system, based on the performance reports received and stored in the system storage 63.

The at least one processing circuit 64 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

Figure 3 is a block diagram of a device 80. The configuration of the device 80 may be used for some or all of the devices of the automation control system 40.

The device 80 comprises a device interface 81 operative to receive machine-readable data. The machine-readable data may comprise an update for software or firmware persistently stored in a device storage 82 of the device 80. The device storage 82 may have stored therein the instruction code 83.

The device 80 comprises one or several device circuits 84. The one or several device circuits 84 are operative to perform a control and/or monitoring function related to a primary system component of the primary system 20. The one or several device circuits 84 may be operative such that the control and/or monitoring function processes measurements (such as measurements of electric characteristics or quantities derived therefrom) to determine a control action to be performed on the primary system component. In one implementation, the control and/or monitoring function may comprise a protection function, such as a distance protection function. In this case, the control action may comprise a switchgear trip, such as a circuit breaker trip or a switch trip. In another implementation, the control and/or monitoring function may be operative to control a tap changer. In the latter case, the control action may be a change of the tap changer position.

Generally, the device 80 may execute a logic to process measurements obtained in the primary system 20 into control actions for the primary system 20 or one of its components. The logic may be defined by the instruction code 83 stored in the device storage 82.

The one or several device circuits 84 may be operative to execute an updater 86. The updater 86 may be operative to modify the instruction code 83 based on the received machine-readable data. The updater 86 may be operative to trigger the update process at a time determined by the processing system 60. The device 80 may be operative to receive information on the trigger time for the update from the processing system 60. The updater 86 may be operative to check at which time the trigger condition is fulfilled to then start with the update process. As explained above, the device 80 may retrieve time information from a source clock 49 to ensure consistency of the time referenced frame used by the device 80 with the time referenced frame used by the processing system 60.

The device 80 may receive the time information that is based on the schedule for the modification of the devices in various ways. For illustration, the device 80 may receive the schedule which indicates, for each of the devices, at which time the update is to be performed by the respective device. Times may be associated with unique device identifiers. The device 80 may receive only the specific trigger time edge at which it is to start the update process. The specific trigger time may be received by the device 80 as metadata for the machine-readable data, as part of the machine-readable data, or otherwise in a dedicated and separate message, for example.

The one or several device circuits 84 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

Operation of the processing system and of the methods of determining the at least one schedule will be described in more detail below.

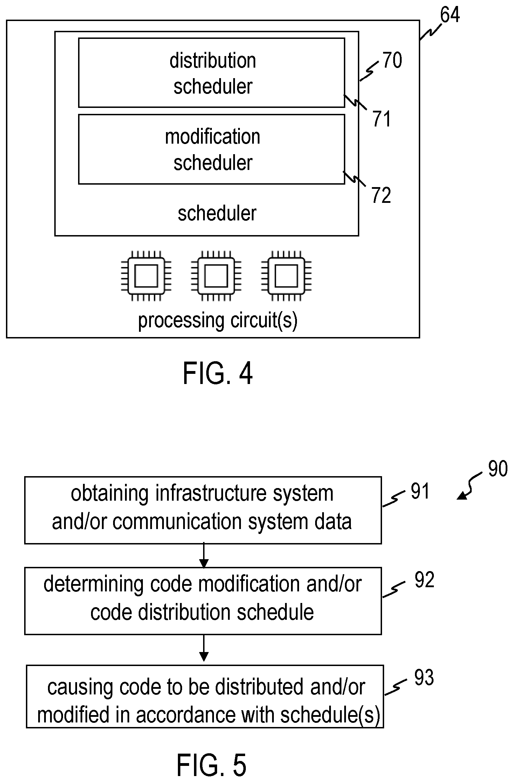

Figure 4 is a schematic block diagram representation of the processing circuits 64 of the processing system 60. As schematically indicated, the scheduler 70 may comprise a distribution scheduler 71 operative to determine at least one schedule for the transfer of the machine-readable data to the devices of the automation control system 40. The scheduler 70 may comprise a modification scheduler 72 operative to determine at least one schedule for the modification of the devices based on the transferred machine-readable data (e.g., by way of software or firmware update).

At least the modification scheduler 72 may be operative to determine the at least one schedule based on observations obtained in the primary system 20. It is also possible that not only the update process at the devices, but also the distribution of the machine-readable data to the devices is timed in accordance with the state of the primary system 20. Thus, the distribution scheduler 71 may also be operative to determine the at least one schedule for the transfer of the machine-readable data based on observations obtained in the primary system 20.

Figure 5 is a flow chart of a method 90. The method 90 may be performed automatically by the processing system 60.

At process block 91, the processing system 60 obtains data related to the primary system 20 and/or the communication system 47. The data may comprise measurements, such as measurements of electric characteristics) obtained in the primary system 20 or quantities derived therefrom.

At process block 92, the processing system 60 determines a schedule for modifying instruction code at the devices of the automation control system 40. Alternatively or additionally, the processing system 60 may determine a schedule for transferring the machine-readable data defining the update for the instruction code to the devices.

Determining the schedule or the schedules may comprise forecasting at least one parameter of the primary system (such as generator unit commitment for various generator units and/or load power for various controllable loads) over a predictive time horizon. The at least one schedule may be determined based on the forecast.

At process block 93, the processing system 60 performs one or several control actions based on the at least one schedule. The processing system 60 may control a distribution of the machine-readable data to the devices of the automation control system in such a manner that the transfer happens in accordance with the determined schedule for the transfer. Alternatively or additionally, the processing system 60 may control a time at which the update process is triggered that each of the devices in accordance with the schedule for the modification determined at process block 92.

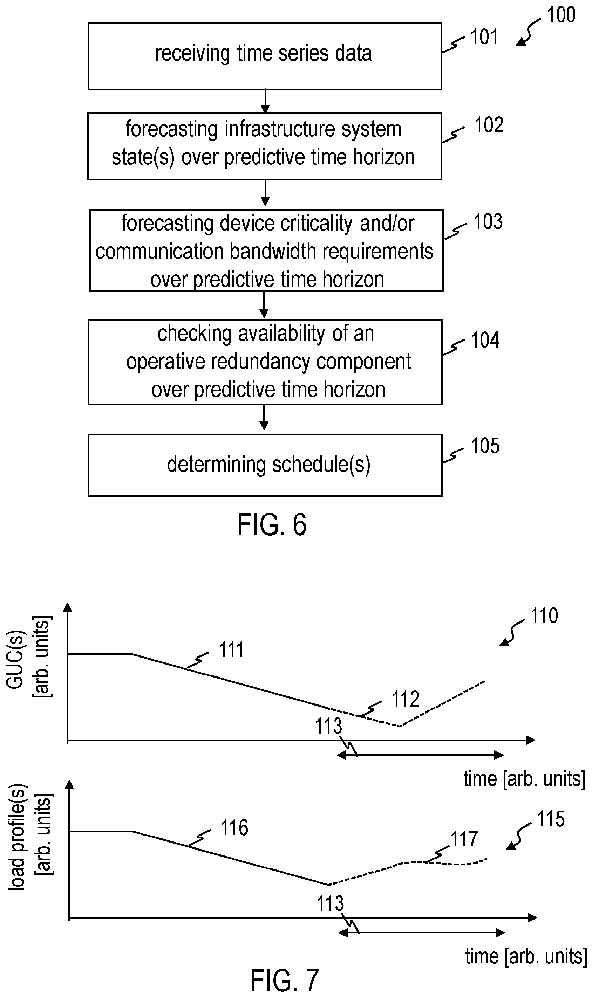

Figure 6 is a flow chart of a method 100. The method 100 may be performed automatically by the processing system 60. The method 100 may be performed to implement process blocks 91 and 92 of the method 90.

At process block 101, the processing system 60 receives time series data. The time series data may comprise observations related to one, several or all of: the primary system 20, the automation control system 40, the redundancy system 50, the communication system 47.

At process block 102, the processing system 60 processes the received time series data to determine a forecast over a predictive time horizon. The forecasting may comprise forecasting a state of the primary system 20. For illustration, for a primary system which is a part of an electric power grid, the forecasting may comprise forecasting generator unit commitment and/or forecasting load powers of controllable loads.

At process block 103, the processing system 60 may determine, based on the results of process block 102, whether any device of the automation control system is critical over a predictive time horizon and/or at which times over the predictive time horizon each of the devices is critical. In this context, a device is considered to be critical if it cannot be taken out of its normal field operation state (e.g. for performing the software or firmware update) without risking safety of the primary system operation.

Alternatively or additionally, the processing system 60 may determine, at process block 103, communication bandwidth requirements expected for the devices of the automation control system 40 for performing their intended functions in normal field use. This may comprise a prediction that can again be based on the result of process block 102.

At process block 104, the processing system 60 may check the availability of redundant implementations of device functions at any time at which a device is considered to be critical. An update process may be acceptable for a device that is critical for primary system operation, provided that there is a redundant implementation for each of the functions performed by the device.

At process block 105, the processing system 60 may determine the at least one schedule based on the results of process blocks 102, 103, and 104. For illustration, the processing system 60 may determine the schedule for the transfer in such a manner that bandwidth consumption is associated with the transfer of the machine-readable data does not adversely affect the bandwidth required by the devices of the automation control system for performing their conventional field operation functions. The processing system 60 may determine the schedule for the modification of the devices (e.g., a software or firmware update) in such a manner that the update is triggered only in a time interval at which the respective device is either not critical or in which there is a redundant implementation for all of the functions of the device.

Figure 7 is a schematic representation of the forecast process. Figure 7 illustrates a generator unit commitment 110. A time series of historical or current generator unit commitment 111 is processed by the processing system 60 to determine a forecast 112 for the generator unit commitment over a predictive time horizon 113. Alternatively or additionally, a forecast may also be performed for load powers. Figure 7 illustrates a load power profile 115. A time series of historical or current load powers 116 is processed by the processing system 60 to determine a forecast 117 for the load profile over the predictive time horizon 113.

The processing system 60 may be operative to use these forecasts in various ways. For illustration, the processing system may be operative to use forecasts of generator unit commitment and/or load power to: forecast forthcoming critical situations in the primary system; forecast forthcoming bandwidth issues in the communication system; forecast forthcoming unavailability of some devices of the automation control system and/or their redundant implementations. To forecast forthcoming critical situations in the primary system, the processing system 60 may be operative to perform power flow computations, for example, without being limited thereto. Examples of critical situations in the primary system may comprise any one or any combination of: overvoltage conditions on buses of the primary system; lines of the primary system operating outside of their nominal operating range; transformers of the primary system operating outside of the nominal operating range; situations which require an adjustment of generator unit commitment as compared to a planned generator unit commitment.

The critical situations may cause the processing system 60 to determine the schedule for the modification of any device of the automation control system 40 in such a manner that a device is not modified during a time period in which it is required to ensure safe operation of the primary system 20, unless there is a redundant implementation for all critical functions performed by the device of the automation control system 40.

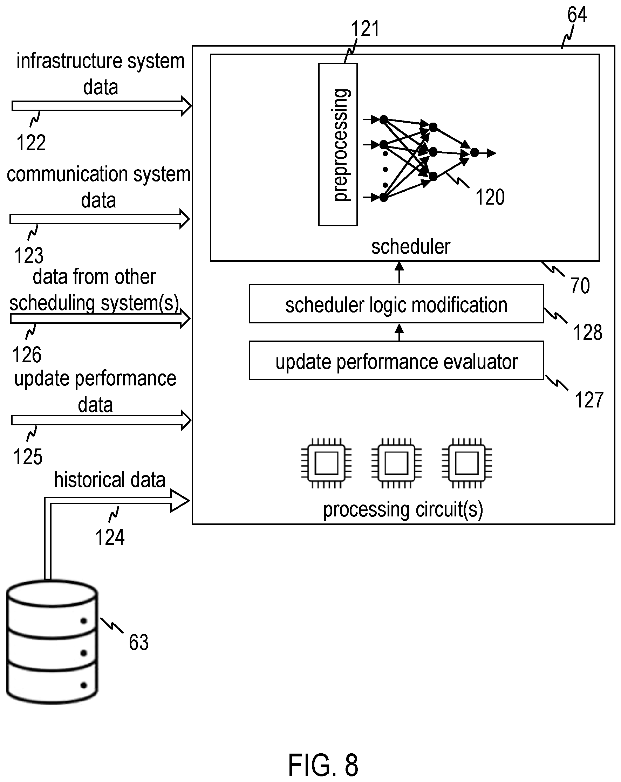

Figure 8 shows a schematic block diagram representation of the at least one processing circuits 64 of the processing system 60. The at least one processing circuit 64 may include and may use various types of data to determine the at least one schedule. The input data may comprise any one or any combination of the following: infrastructure system data 122; communication system data 123; historical data 124; update performance data 125; data from other scheduling systems associated with fleets of automation control system devices of automation control systems other than the automation control system 40 for which the processing system 60 is responsible (in terms of determining the at least one schedule).

The infrastructure system data 122 may comprise topology data of the infrastructure system, such as a single line diagram representation of an electric power grid or a portion thereof. The infrastructure system data 122 may further comprise measurements obtained on the infrastructure system. The infrastructure system data 122 may comprise other observations, such as messages indicating one or several electric characteristics of the infrastructure system. Such messages are routinely exchanged by the devices of the automation control system. The messages may be messages in accordance with IEC 61850.

The communication system data 123 may comprise bandwidth usage for communication links of the communication system 47. The communication system data 123 may also comprise available bandwidth for the communication links. The communication system data 123 may comprise information on the bandwidth usage by the various devices of the automation control system 40.

The historical data 124 may comprise information on previous update processes that were performed in the fleet of automation control system devices of the automation control system 40.

This historical data 124 may comprise, for example, information on historical states of the primary system 20, the automation control system 40, the redundancy system 50, and the communication system 47, in association with performance data related to previous update processes. The performance data may comprise indications of than previous update processes failed in some of the devices of the automation control system 40.

The update performance data 124 may comprise reports on the performance of the update. For illustration, the update performance data 124 may comprise bandwidth usage data indicating bandwidth used for the transfer of the machine-readable data. Alternatively or additionally, the update performance data 124 may comprise information on a duration for which a device of the automation control system 40 was out of its normal field operation for performing a previous update process.

The processing system 64 may be operative to store the data related to the primary system, the automation control system, the redundancy system, and the communication system in association with the update performance data 125. This data may subsequently be used for updating a logic executed by the at least one processing circuit 64 to determine the at least one schedule.

The at least one processing circuit 64 is operative to execute the scheduler 70, as previously explained. The scheduler 70 is operative to provide, responsive to input data (which may comprise data related to the primary system 20, the automation control system 40, the redundancy system 50, and the communication system 47) the at least one schedule. The scheduler 70 may comprise at least one trained machine learning model 120. The at least one trained machine learning model 120 may have an input operative to receive the input data of the scheduler 70 or preprocessed values are obtained by a processing the input data of the scheduler 70 by preprocessing 121. The at least one trained machine learning model 120 may comprise at least one ML model operative to process the received system state data into one or several forecasts. Implementations thereof have been described before. Thus, the at least one trained machine learning model 124 may comprise at least one ML model operative to provide an output useful in determining at which time in the future the machine-readable data may be transferred to the devices of the automation control system and/or at which time in the future the devices of the automation control system may be modified based on the transferred machine-readable data.

The processing system 60 may but does not need to use at least one trained ML model to predict future conditions in the primary system 20 or the communication system 47. For illustration, digital twin-based data may be used to perform this forecast, in addition to or as an alternative or using a trained machine learning model.

The processing system 60 may include a scheduler logic modification 128 operative to modify the logic by which the scheduler 70 processes its input data to determine the at least one schedule. The scheduler logic modification 124 may be operative, responsive to the update performance data 124, to change one or several parameters of the scheduling logic applied by the scheduler 70. Adjusting the one or several parameters of the scheduling logic may comprise adjusting parameters of the trained machine learning model 120 or adjusting parameters of the at least one digital twin.

The modification of the scheduling logic may be triggered by an update performance evaluator 127. Based on the update performance data 125, the update performance evaluator 127 may decide at which time the scheduling logic is to be modified, if at all. The update performance evaluator 127 may invoke the scheduler logic modification 128 in response to detecting that the update performance data 125 is indicative of poor or sub-optimal update performance.

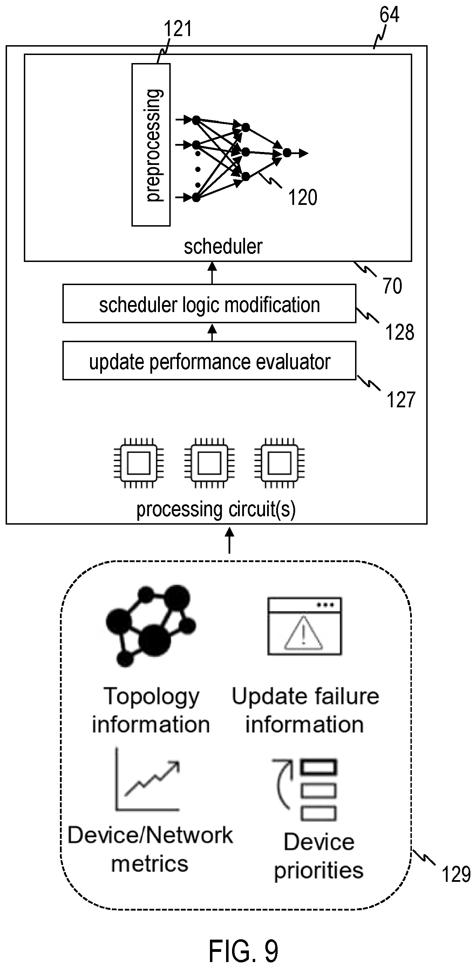

Figure 9 is a schematic block diagram of the at least one processing circuit 64, to further illustrate input data that may be used for determining the at least one schedule and/or to modify the scheduling logic. The input data 129 may comprise one, several or all of: topology information; device or network metrics; update failure information; device priorities.

The topology information may provide information on a topology of the primary system 20, such as by specifying which nodes of a single line diagram of the primary system are connected by lines. The topology information of the primary system 20 may be used to forecast forthcoming critical situations that prevent a device of the automation control system 40 from being modified during the period. The topology information may provide information on a topology of the automation control system 40. The topology information on the automation control system 40 may be used to ensure, for example, that a device is not modified in a time interval in which one or several adjacent devices are concurrently modified. The topology information may comprise topology information of the communication system. The topology of the communication system 47 may be used to forecast how events in the primary system 20 of the automation control system 40 are going to affect bandwidth usage in the communication system 47. The topology information may comprise topology information of the communication system. The topology of the communication system 47 may be used to forecast how events in the primary system 20 of the automation control system 40 are going to affect bandwidth usage in the communication system 47. Topology information for the redundant system may be used to determine associations of redundant function implementations with devices of the automation control system 40.

The device and/or network metrics may indicate loads of the devices of the automation control system 40 and/or of the communication system 47.

The update failure information may include information on when updates failed for any of the devices of the automation control system. This information may be used to improve the scheduling logic and to re-trigger an update process on a device on which it has previously failed.

The device priorities may include information on how various devices of the automation control system are to be prioritized. For illustration, the device priorities may define an order in which an operator of the primary system 20 and the automation control system 40 generally prefers updates to be implemented on the devices of the automation control system 40. Alternatively or additionally, the device priorities may define an order that specifies the relevance of the respective devices for safe operation of the primary system 20. These priorities may be set in an operator-controlled manner.

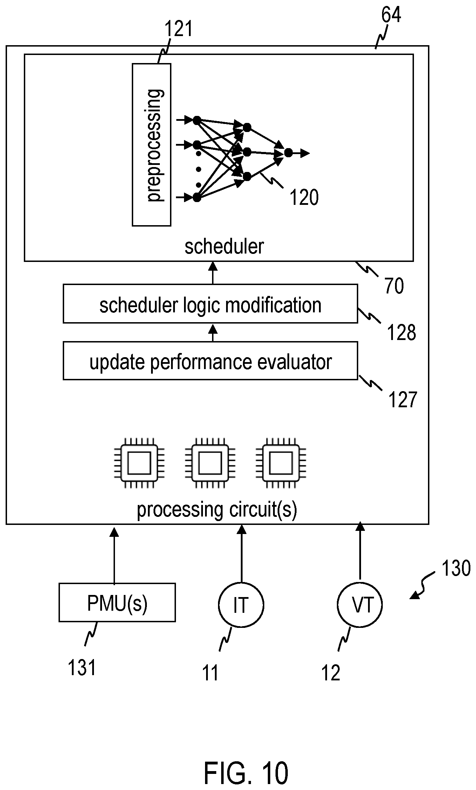

Figure 10 is a schematic block diagram of the at least one processing circuit 64, to further illustrate input data that may be used for determining the at least one schedule and/or to modify the scheduling logic. The input data 130 may comprise measurements obtained in the primary system 20. The measurements may comprise measurements of electric characteristics. The measurements may be obtained using measurement instrumentation, such as one or several phasor measurement units 131, one or several current transformers 11, and/or one or several voltage transformers 12. These measurements may be included as part of the device and/or network metric, for example.

As already explained and as schematically illustrated in Figure 8, Figure 9, and Figure 10, the processing system 60 may execute at least one trained machine learning model 120 to determine the at least one schedule. The machine learning model may be a recurrent neural network or may comprise a stack of LSTM cells to process an input that comprises one or several time series into an output useful for determining the at least one schedule (e.g., by forecasting a future state of the primary system 20 and/or the communication system 47).

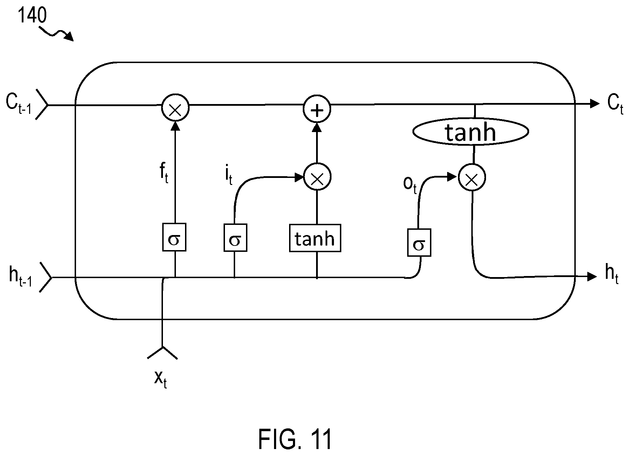

Figure 11 is a schematic representation of an LSTM cell that may be used in the processing system 60. In Figure 11, C designates a cell state. The parameter a designates a hidden state. The parameter except designates an input. The subscript respectively designates the time. The subscript t designates the time of the input processed by the sale illustrated in Figure 11. The subscript t - 1 designates the preceding time.

During training, parameters of the LSTM cell or of several LSTM cell arranged in a stacked structure may be trained. The training may comprise training of the forget gate (designated by fₜ), the input gate (designated by iₜ) and the output gate (designated by oₜ).

Training the various gates may comprise training the weight parameters and bias parameters of each of the gates of the LSTM cell.

The training of the at least one machine learning model may be performed using training data. The training data is training data obtained from one or several primary systems of a same type as the primary system 20 (e.g., an electric power system). The training data may also comprise training data indicative of devices and/or network metrics, such as device processing loads for devices of the automation control system and/or bandwidth usage by the devices of the automation control system. The training data may be annotated with annotations indicating which of the devices are critical in view of the state of the primary system 20.

The training data may be split into a training set (which may include, e.g., 70% of the training data), into a validation set (which may include, e.g., 15% of the training data), and into a test set (which may include, e.g., 15% of the training data). The training data may comprise data aggregated over a time period of several days, weeks, or months on the primary system 20 or an infrastructure system aching to the primary system 20. Data augmentation may be performed, to account for the fact that critical situations in the primary system 20 are, unfortunately, typically rare as compared to the times in which the primary system 20 is not operating in a critical states.

The training data may also comprise metadata related to updates installed in the respective training cases, as well as update performance data related to the installation processes. This metadata may comprise information on a size (e.g., a number of bites) of the machine-readable data that is to be transferred. The metadata may additionally or alternatively comprise information on an expected run time of an update process, if the machine-readable data defines an update for firmware or software.

In addition to data related to the primary system 20, the redundancy system 50, and/or the communication system 47, the processing system 60 may also use metadata related to the machine-readable data to determine the at least one schedule in field use. This metadata may comprise information on a size (e.g., a number of bites) of the machine-readable data that is to be transferred. The metadata may additionally or alternatively comprise information on an expected run time of an update process, if the machine-readable data defines an update for firmware or software.

The processing system 60 may interact with or may perform the functions of a fleet management system (FLM system) for a plurality of devices of the automation control system 40.

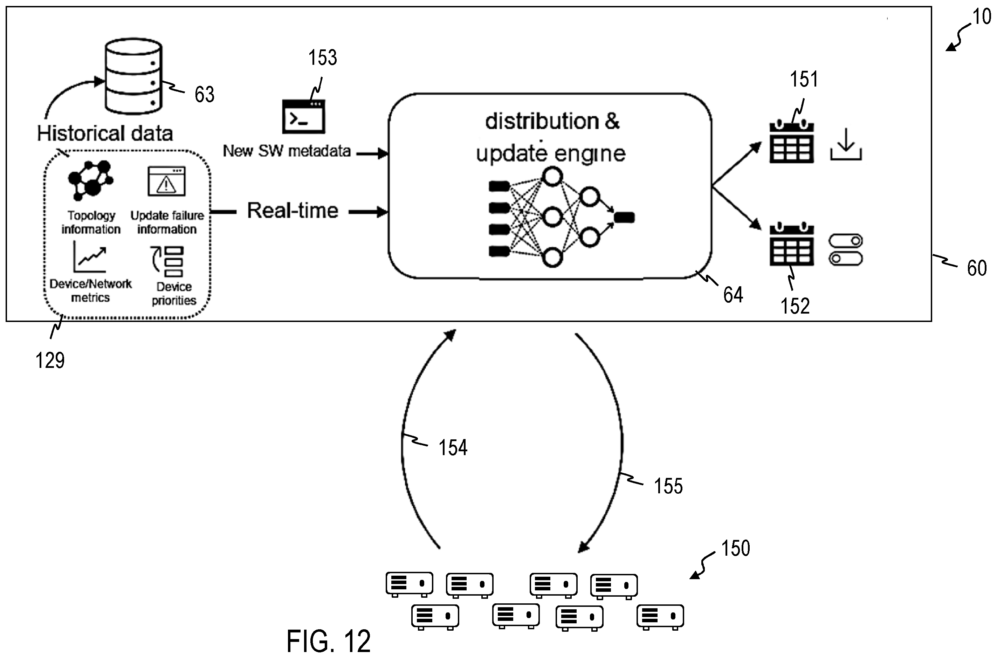

Figure 12 is a schematic diagrammatic representation of a system 10 according to an embodiment. The processing system 60 in this case is implemented as a fleet management server. The fleet management server comprises one or several processing circuits 64 operative to process inputs 129 related to the primary system 20, the automation control system 40, and the communication system 47. The one or several processing circuits 64 are also operative to receive and process metadata related to machine-readable data that is to be transferred. As mentioned above, the metadata may comprise information on a size of the machine-readable data to be transferred and/or on an expected installation run time and/or other data useful for determining when the machine-readable data is to be used for modifying any of the devices of the automation control system.

Information received and used to determine a schedule 151 for the transfer and/or another schedule 152 for the modification of the devices may be stored as historical data in the system storage 63. The stored data may also include update performance data provided by a fleet 150 of devices of the automation control system.

The processing system 60, implemented as a fleet management server, may generate and transfer an output 155 that is provided to the fleet of devices 150. The output 155 may comprise the machine-readable data and the time information defining a time at which each of the devices of the fleet 150 is to start the update process.

The processing system 60 may be operative to receive input 154 from the fleet of devices 150. The input 154 may comprise device and/or network metrics, such as current device processing loads and/or current device communication bandwidth usage. The input 154 received from the fleet of devices 150 may also comprise update performance data. The update performance data may comprise information on whether an update for successful and/or the time over which 1 of the devices was out of its normal field operation for performing the software or firmware update based on the machine-readable data. The processing system 60 may be operative to use the update performance data for modifications of a logic used to determine the at least one schedule 151, 152.

The functions of the processing system 60 may be integrated into one or several devices of the automation control system. This may be particularly useful if there are some devices for which it is not possible to reliably determine a schedule using a centralized processing system. Examples of such devices may include devices in remote areas and/or devices that may be subject to intermittent disconnection from a centralized processing system.

In this case, one or several devices may be operative to apply a scheduling logic to determine at which time modification of a device is to be started. The respective processing may be performed in a manner as described above in association with the processing system 60.

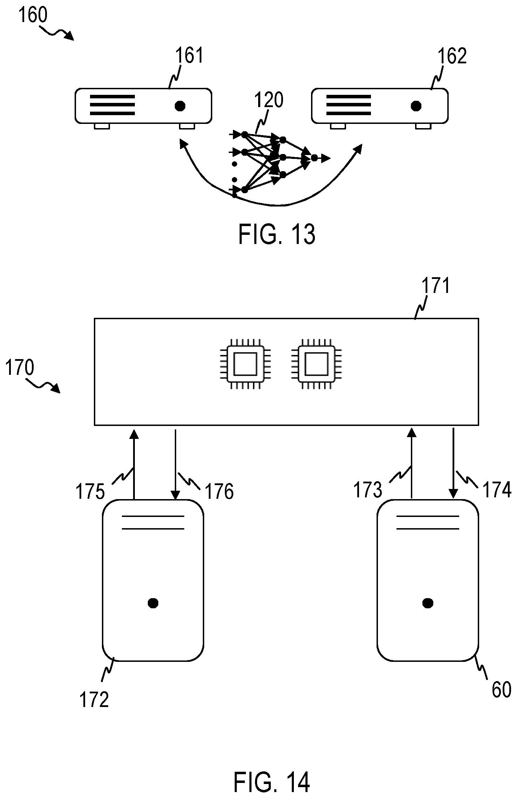

Figure 13 is a schematic diagram of a system 160 comprising devices 161, 162 of an automation control system. The devices 161, 162 may be communicatively coupled to each other to determine a schedule that defines at which time each of the devices 161, 162 will start a firmware or software update process based on machine-readable data. The devices 161, 162 may use at least one trained machine learning model 120, which may be implemented as described above, to determine the schedule. The devices 161, 162 may exchange update performance data, such as information on whether a given update was successfully installed and/or the run time for installing the update. This performance data may be used to modify the scheduling logic, such as by retraining the trained machine learning model 120.

The processing system 60, irrespective of whether it is a dedicated centralized system provided for a fleet of devices of an automation control system or whether it is integrated with one or some of the devices, may be operative such that the scheduling logic can be updated based on update performance data. Such an update may be performed by the processing system 60 is itself. In this case, the processing system 60 may also receive update performance data and/or information on modifications of the scheduling logic implemented by another processing system responsible for another fleet of automation control system devices which may be under the control of a different operator.

Alternatively or additionally, a federated approach may be used to update the scheduling logic. In this case, several processing systems may share anonymized data (such as the parameters of the machine learning model retrained by the respective processing system) with each other or with a federated server that performs the modification of the trained machine learning model, e.g. by retraining.

Figure 14 is a schematic diagrammatic representation of a system 170, which comprises several processing systems 60, 172 operative as described in detail herein. The several processing system 60, 172 may be associated with automation control systems operated by different operators. Each of the processing systems 60, 172 may be operative under the control of the operator of the respective automation control system.

The system 170 further comprises the federated server 171. The federated server 171 may be operated under the control of a party different from the operators of the automation control systems. For illustration, it is useful for the federated server 171 to operate under the control of the vendor of the devices of the automation control systems.

In operation, the processing systems 60, 172 may provide parameters of their respectively updated machine learning models to the federated server 171. Thus, the processing system 60 may be operative to generate output 173 indicating an update of the scheduling logic (e.g. an update of the trained machine learning model) determined by the processing system 60. Another processing system 172 may be operative to generate output 175 indicating an update of another scheduling logic (e.g. an update of the trained machine learning model) determined by the other processing system 172.

The federated server 171 may be operative to process the data 173, 175 to aggregate the information previously collected and used by the processing system 60 and the other processing system 172. Thereby, the federated server 171 may generate a further modified scheduling logic. The federated server 171 may be operative to output parameters of the further modified scheduling logic to the processing system 60 and the other processing system 172.

The processing system 60 may thus receive input 174 from the federated server 171 and may further update the scheduling logic based on this input 174. The input 174 is based on update performance as previously observed by the processing system 60 and the other processing system 172.

The other processing system 172 may receive input 176 from the federated server 171 and may further update the scheduling logic based on this input 176. The input 176 is based on update performance as previously observed by the other processing system 172 and by the processing system 60.

Thereby, a further improved scheduling logic is attained. This can be done in a manner which does not require confidential data (such as primary system observations) to be shared between operators of different parts of the power grid.

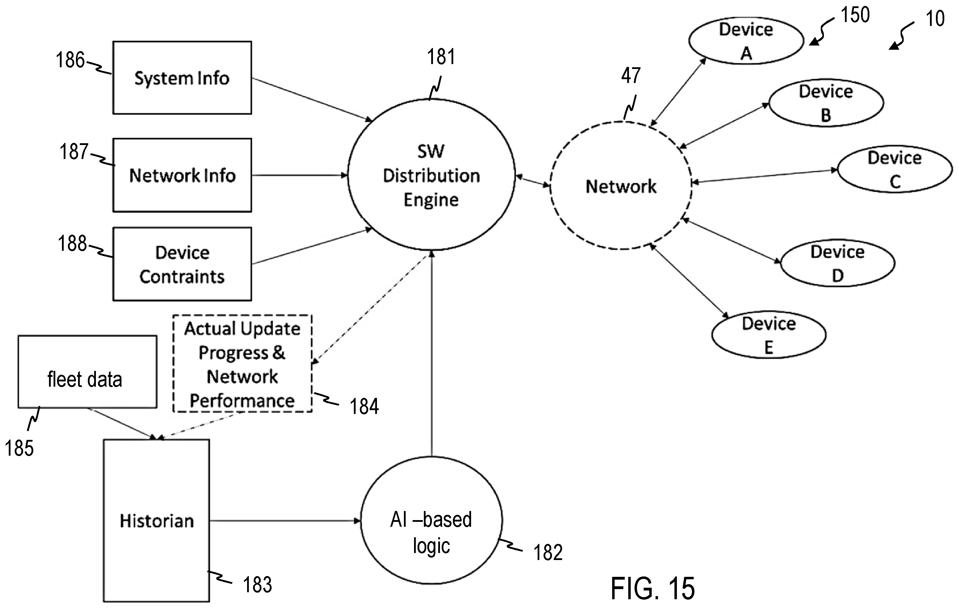

Figure 15 is a schematic block diagram representation of a system 10 according to an embodiment, which comprises a fleet 150 of devices of an automation control system, a communication system which may be implemented as a communication network 47, and a processing system operative to determine at least one schedule for a transfer of machine-readable data for the devices of the fleet 150 and/or modification of each of the devices in the fleet 150.

The processing system may generally comprise an artificial intelligence (AI)-based logic 182. The AI-based logic 182 may be operative to determine a schedule for the transfer and/or a schedule for the modification of each of the devices by processing input, which may have any of the configurations disclosed above. The AI-based logic 182 may be trained or retrained based on data in a historian 183. The data in the historian 183 may comprise update performance data (such as data on an update probe trace and network performance 184 and the fleet data 185 collected from the fleet 150 or otherwise related to the fleet 150.

The processing system may comprise a software distribution engine 181. The software distribution engine may use an output of the AI-based logic 182 in combination with system information 186 related to the automation control system and, optionally, the primary system, network information 187 related to the communication system 47, and device constraints 188 indicative of constraints of each of the devices of the fleet 150.

The software distribution engine 181 may be operative to perform the transfer to provide data to each of the devices in accordance with the determined schedule.

The software distribution engine 181 may alternatively or additionally be operative to provide a timing information to each of the devices to control the time at which the update process is started by each of the devices.

The processing system according to any of the embodiments disclosed herein may but does not need to use AI-based techniques for determining the at least one schedule. For illustration, techniques such as digital twins may be used to forecast future states of the primary system 20, the automation control system 40, and/or the communication system 47. The determination of the at least one schedule may then be performed in a digital twin-based manner.

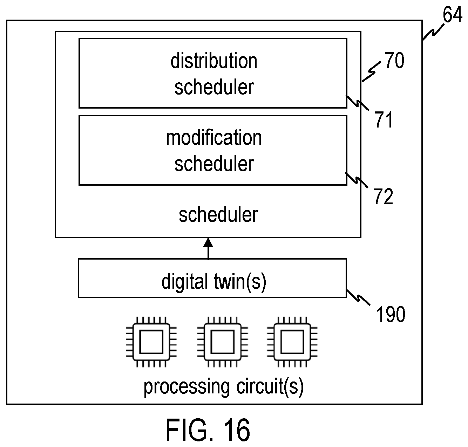

Figure 16 shows a schematic representation of the processing circuit or processing circuits 64 of the processing system 60. The processing circuit or the processing circuits 64 are operative to use an output of at least one digital twin 190 to determine the at least one schedule. Thus, the distribution scheduler 70 one and/are the modification scheduler 72 may be coupled to at least one digital twin 190 and may be operative to determine the at least one schedule based on the at least one digital twin 190.

The at least one digital twin may comprise a digital twin of the primary system and/or a digital twin of the automation control system. The at least one digital twin may also comprise a digital twin of the communication system. The respective techniques of implementing digital twins are known in the field of electric power systems, for example. Digital twins are also already used to perform various control operations. Thus, these digital twins may also be used to determine the at least one schedule.

Figure 16 shows a schematic representation of the processing circuit or processing circuits 64 of the processing system 60. The processing circuit or the processing circuits 64 are operative to use an output of at least one digital twin 190 to determine the at least one schedule. Thus, the distribution scheduler 70 one and/are the modification scheduler 72 may be coupled to at least one digital twin 190 and may be operative to determine the at least one schedule based on the at least one digital twin 190.

The at least one digital twin may comprise a digital twin of the primary system and/or a digital twin of the automation control system. The at least one digital twin may also comprise a digital twin of the communication system. The respective techniques of implementing digital twins are known in the field of electric power systems, for example. Digital twins are also already used to perform various control operations. Thus, these digital twins may also be used to determine the at least one schedule.

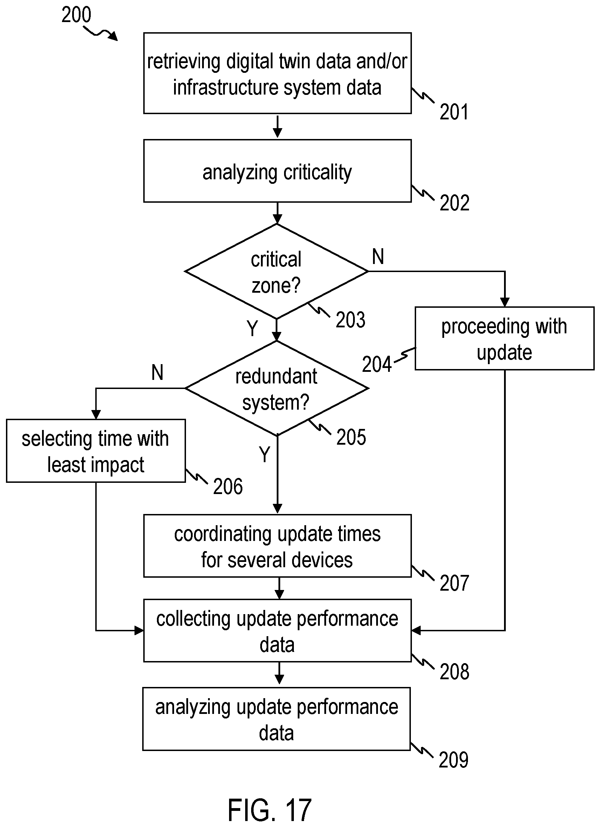

Figure 17 is a flow chart of a method 200. The method 100 may be performed automatically by the processing system 60 according to any 1 of the embodiments disclosed above.

At process block 201, digital twin data from at least one digital twin is retrieved. Alternatively or additionally, observations related to the system (e.g., the primary system 20, the automation control system 40, and the communication system 47) are retrieved.

At process block 202, a criticality and analysis is performed. The criticality analysis may comprise determining which devices of the automation control system are presently or at a point over a predictive time horizon in the future critical in the sense that they should not be taken out of the normal field operation, in order to not prejudice the safety of the primary system.

The determination at process block 202 may be performed in a zone-based manner. Thereby, the determination can be performed more efficiently in a systematic manner. The techniques of dividing a primary system into one or several zones in a systematic manner are available to the skilled person. For illustration, in the context of electric power systems, a part of the electric power grid may be divided into various zones by identifying feeders and defining zones in accordance with the feeder locations. Zones of the electric power system may be defined in such a manner that they could be separated from each other, for example.

At process block 203, it is determined whether there is a critical zone. If there is no critical zone, the update may be triggered at process block 204.

At process block 205, if there is a critical zone, it is determined whether there is a redundant implementation for at least the safety-critical functions of the devices of the automation control system. If there is no redundant implementation, at process block 206, the time at which safety will be impacted at least by the update process is selected. The update may then be carried out in accordance with the selected time.

At process block 207, if there is a redundant implementation of at least some functions of the devices, the update times for several devices may be coordinated with each other. The coordination may comprise ensuring that a device and other devices that perform a redundant implementation of protection or other control functions are not updated concurrently. The coordination may alternatively or additionally comprise ensuring that adjacent devices of the automation control system are not updated concurrently.

At process block 208, update performance data is collected. The collected update performance data may be stored in a historian.

At process block 209, the update performance data may be analyzed. Analyzing the update performance data may comprise determining whether a scheduling logic is to be modified, in view of the update performance data. Analyzing the update performance data may comprise updating the scheduling logic, such as by retraining a machine learning model and/or using a federated approach to improve a machine learning model.

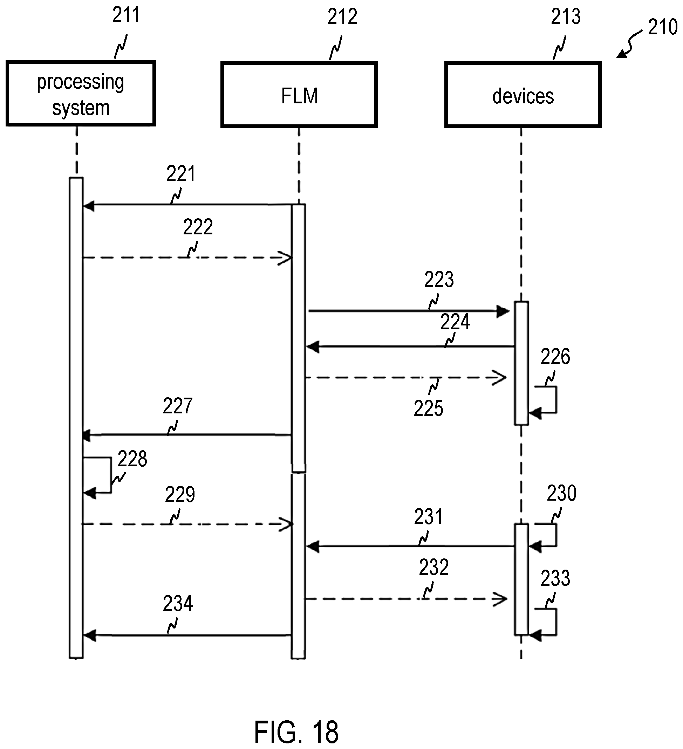

Figure 18 is a signaling diagram 210 of a system according to an embodiment. The system generally comprises a fleet management system 2 12, a fleet of devices 213, and a processing system 211 which may be operative as explained for any of the processing systems 60 herein above. The operation will be described in association with a firmware update distribution but is not limited thereto and may generally be applied to any distribution of machine-readable data and modification of devices based thereon.

The processing system 211 may be operative to provide estimations of a duration of distributing the new firmware to a list of devices in the fleet and generating schedule(s) for the distribution. The estimations and schedules may be generated based on the information about previous firmware distribution events stored in a database, such as the historian. The processing system 211 may be implemented as a machine learning-based logic with database access.

The fleet management (FLM) system 212 is operative to manage the firmware update process, including the distribution of the new firmware to the devices 213.

The devices 213 are operative to receive the new firmware update and to install the new firmware update to thereby modify device operation.

At 221, after the FLM system 212 receives the new firmware F to distribute and determines the list of target devices D₁, D₂, ..., Dₙ , the FLM system 212 sends a request to the processing system 211 for an estimation of the duration for the distribution and a recommended distribution schedule.

At 222, processing system 211 outputs a recommended distribution schedule and its estimated duration D. The schedule is a list of elements (Sᵢ, Tᵢ^{start}, Tᵢ^{end}), where Sᵢ is a subset of the devices to which the firmware should be distributed starting at time Tᵢ^{start} and expected to complete at Tᵢ^{end}. The estimation is based on historical data stored in the database from previous firmware distributions, including size of the firmware, update type (full image or incremental update), date of the update, network traffic, status of the devices, timestamps of critical events experienced by devices in the past.

At 223, after receiving the recommended distribution schedule and its estimated duration, an operator of the FLM system 212 validates it (optional), allowing potential manual changes and iterations of the estimation process. The distribution process starts at time T₁^{start} with the devices in the set S₁. These devices are notified about the availability of the new firmware.

At 224, once the devices are notified, they request the firmware from the FLM system 212.

At 225, the server responds to the devices by transferring the firmware.

At 226, during the distribution, the devices can interrupt the transfer at any time, in case a critical operational event occurs (e.g., protection function triggers). In this case, the device computing and networking resources are fully available for the operational functionality.

At 227, if the device interrupts the distribution process, the FLM system 212 automatically detects this, without the need of the device to send additional notifications, and stores this event in the database, together with the current distribution status.

At 228, the processing system 211 updates the distribution schedule and its estimated duration based on the interruptions observed by the FLM system 212.

At 229, the processing system 211 sends the updated plan to the FLM system 212. The updated plan is displayed to the FLM operator for information and (optionally) re-approval.

At 230, once the device completes the processing of the operational event, the device evaluates whether it has sufficient spare computation and networking resources to resume the firmware download.

At 231, the device requests to resume the distribution process by contacting the FLM system 212.

At 232, the FLM system 212 continues sending the new firmware, by resuming the process from the point where it was previously interrupted.

At 233, the device successfully completes the download of the new firmware.

At 234, once the distribution schedule is complete, the FLM system 212 stores all the information in the Database, including the evolution of the schedule and estimated duration and the network traffic.

While the above explanations have been provided in association with the distribution, similar techniques may be applied to controlling the modification of the devices based on the transferred machine-readable data.

However, as will be appreciated from the above, the transfer and/or the modification of the devices of the automation control system is performed in such a manner that it reduces the risk of critical situations occurring in the primary system due to the update process of a device of the automation control system.

While the methods, devices, and processing systems have been described above in detail with reference to an automation control system of an electric power system, the techniques are not limited thereto. For illustration, the methods, devices, and processing systems may also be applied to other infrastructure systems, including other critical infrastructure systems, such as fresh water supply, heating fluid distribution, gas or oil distribution, or other distribution grids.

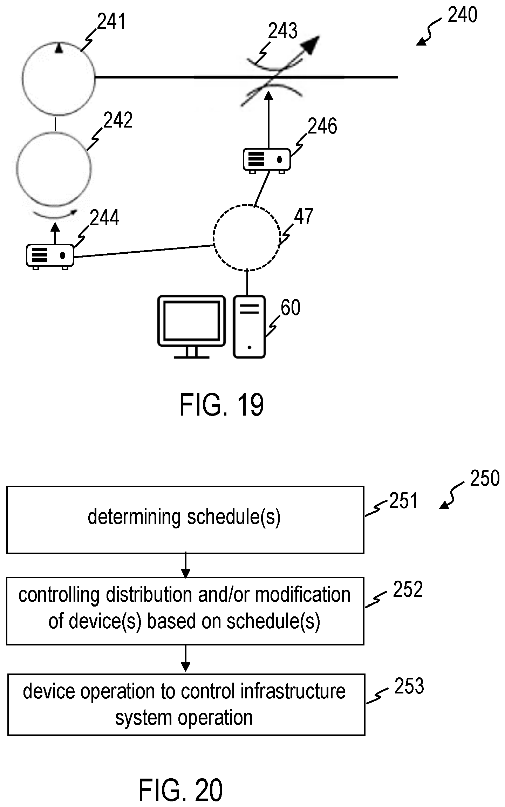

Figure 19 schematically illustrates a system 240 that comprises an infrastructure system comprising hydraulic components such as a pump 241 driven by a motor 242 and a controllable valve 243.

An automation control system comprises several devices 244 and 246 associated with primary system equipment. The processing system 60 according to any of the embodiments disclosed herein is operative to determine at least one schedule for a transfer of machine-readable data to the devices 244, 246 and/or for a modification of these devices.

The techniques disclosed herein are generally operative to improve the process of modifying (in particular updating) devices of an automation control system. Thereby, updates may be implemented in a more secure and more timely manner. This also improves operation of the automation control system and of the primary system with which the automation control system is associated. Accordingly, the techniques disclosed herein also extend to methods and systems of operating an infrastructure system or other primary system with the aid of an automation control system.

Figure 20 is a flow chart of a method 250 according to an embodiment. The method 250 may be performed automatically by a system that comprises the processing system 60 and the automation control system 40.

At process block 251, the processing system 60 determines at least one schedule for a transfer of machine-readable data to the devices of the automation control system and/or for a modification of the devices of the automation control system based on the machine-readable data.

At process block 252, the processing system 60 controls the transfer of the machine-readable data and/or the modification of the devices in accordance with the determined at least one schedule.

At process block 253, the devices of the automation control system, updated in accordance with the received machine-readable data, perform protection functions or other control functions related to the primary system. This may comprise controlling primary system components such as switchgear.

According to embodiments, there are provided processing systems that allow a fleet management system (FLM) to handle a firmware or software update process for distributed and fault tolerant systems in safety-critical applications, such as electrical substations and power systems. The techniques disclosed herein are operative to enhance the deployment process while it is ongoing, e.g., adapt if a device occupies the bandwidth of the network with other tasks. In this case, the processing system and/or FLM may be operative to further optimize the progress accordingly, by postponing the update process in this device.

The methods, processing systems, and systems disclosed herein are also operative to accommodate complex update processes.

Importantly, the processing systems and methods may take advantage of a logic that is trained based on historical data of the communication system load and software updates to determine a good, or close-to-optimum, schedule for the next update process. The methods, processing systems, and systems may be operative to consider the device constraints and grid load forecast or other available system information when determining the optimal plan for the update process. While the update process is ongoing, each device reports the actual process status to the processing system or FLM system.

If the device progress indicates an extended process duration, then the processing system may be operative to automatically search for an alternative update slot.

Thereby, methods, processing systems, and systems are able to minimize the impact on ongoing mission critical processes.

The methods, processing systems, and systems may also be operative to further improve the ongoing update process when the device progress is better than estimated, by adding further devices to be considered for updating.

Various effects and advantages are attained by the processing system, method, and system according to embodiments. The processing system and method provides enhanced techniques of modifying devices of an automation control system. Thus, the processing system, method and system according to embodiments addresses the need for managing an automatic update process for large fleets of devices, which is a key functionality for the future power systems industry, in the context of digitalization and cybersecurity risks. The processing system and method assists ensuring that the latest security patches and functionality are deployed to the field devices in a timely and efficient manner.

The techniques disclosed herein are operative to improve the update of devices of an automation control system, which the automation control system is (and remains) deployed in field use, without requiring any deinstallation or re-configuration or re-commissioning of the devices. The techniques disclosed herein are operative to modify the devices after they have been configured and commissioned for their respective desired application.

While embodiments have been described in detail with reference to the drawings, various modifications may be implemented in other embodiments. For illustration rather than limitation:
- While embodiments have been described that are operative to determine both a schedule for the transfer of the machine-readable data and a schedule for modifying the devices, it is not required that both schedules are determined using the techniques disclosed herein.
- While embodiments have been described in which the processing system 60 is implemented as a centralized processing system for devices of an automation control system, several processing systems 60 may be deployed for the same automation control system and/or the functions of the processing system 60 may be integrated with one or several of the devices.
- While embodiments have been described in which the devices may be IEDs operative in accordance with IEC 61850, the techniques disclosed herein may be used in association with fleets of other devices of automation control systems.
- While embodiments have been described in which the devices are operative to perform protection functions (such as distance protection), the techniques may also be used in association with fleets of devices that perform other functions, such as control functions different from distance protection functions. Examples include an energy management system (EMS) or power management system (PMS) useful in association with a power grid having renewable energy sources.
- While embodiments have been described in which firmware or software is updated in the devices, the techniques may also be used for adjusting other settings that affect device operation. For illustration, the techniques may be used to control the transfer and/or modification of setpoints of an EMS and/or PMS.

Embodiments may be used in association with a power grid having renewables penetration, such as power grid comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method for controlling a transfer and/or a modification of machine-readable data processed by devices (41-46; 161, 162) of an automation control system (40), the method comprising:
determining, by a processing system (60; 172; 211, 212), at least one schedule (151, 152) for one or both of:
a transfer of the machine-readable data to the devices (41-46; 161, 162),
a modification of the devices (41-46; 161, 162) based on the machine-readable data; and
controlling, by the processing system (60; 172; 211, 212), the transfer and/or the modification in accordance with the determined at least one schedule (151, 152);
wherein the processing system (60; 172; 211, 212) executes a scheduler (151, 152) to determine the at least one schedule (151, 152); and
wherein the method further comprises adjusting parameter values of the scheduler (151, 152) during field operation of the processing system (60; 172; 211, 212), wherein the parameter values of the scheduler (151, 152) are adjusted based on reports on execution of the transfer and/or the modification.

2. The method of claim 1, further comprising receiving infrastructure system data related to an infrastructure system (20) with which the devices (41-46; 161, 162) are associated, wherein the at least one schedule (151, 152) is determined based on the received infrastructure system data.

3. The method of claim 2, wherein the infrastructure system data comprises generator unit commitment and/or electric load power data over a time period.

4. The method of claim 2 or claim 3, wherein the infrastructure system data comprise one or both of:
observations obtained using measurement instrumentation,
messages related to operation of the devices (41-46; 161, 162), optionally wherein the messages comprise messages compatible with IEC 61850 or optionally wherein the messages comprise GOOSE messages.

5. The method of any one of the preceding claims, further comprising determining, by the processing system (60; 172; 211, 212), a criticality of each of the devices (41-46; 161, 162) for operation of an infrastructure system (20) with which the devices (41-46; 161, 162) are associated, wherein the processing system (60; 172; 211, 212) determines the at least one schedule (151, 152) based on a criticality of each of the devices (41-46; 161, 162) for system operation.

6. The method of claim 5, wherein determining the criticality comprises determining the criticality over a predictive time horizon (113).

7. The method of claim 5 or claim 6, wherein determining the at least one schedule (151, 152) comprises determining whether there is a redundant system (50) for at least some of the devices (41-46; 161, 162) and whether the redundant system (50) is operative.

8. The method of any one of claims 5 to 7 when dependent on any one of claims 2 to 4, wherein the processing system (60; 172; 211, 212) determines the criticality based on the infrastructure system data.

9. The method of any one of the preceding claims, further comprising receiving communication system data related to usage of one or several communication links of the plurality of devices (41-46; 161, 162), wherein the at least one schedule (151, 152) is determined based on the communication system data.

10. The method of any one of the preceding claims, wherein the at least one schedule (151, 152) is determined based on a digital twin (190).

11. The method of any one of the preceding claims, wherein adjusting the parameter values of the scheduler (151, 152) comprises invoking, by an update performance evaluator (127) and responsive to update performance data (125), a scheduling logic modification (128) in response to detecting that the update performance data (125) is indicative of poor or sub-optimal update performance, and wherein the scheduling logic modification (128) changes one or more parameters of a scheduling logic of the scheduler (151, 152).

12. The method of any one of the preceding claims, wherein the scheduler (151, 152) comprises at least one artificial intelligence, AI, model (120), wherein the at least one AI model (120) is trained based on the historical data, wherein the at least one schedule (151, 152) is determined based on an output of the at least one AI model (120).

13. A method of controlling an infrastructure system (20), the method comprising:
controlling, by devices (41-46; 161, 162) of an automation control system (40), equipment of the infrastructure system (20); and
performing the method of any one of the preceding claims for controlling the transfer and/or the modification of machine-readable data processed by devices (41-46; 161, 162).

14. Instruction code which, when executed by at least one processing circuit (64), causes execution of the method according to any one of the preceding claims.

15. A processing system (60; 172; 211, 212) operative to control a transfer and/or a modification of machine-readable data processed by devices (41-46; 161, 162) of an automation control system (40), the processing system (60; 172; 211, 212) comprising:
at least one interface; and
at least one processing circuit operative to
determine at least one schedule (151, 152) for a transfer of the machine-readable data to the devices (41-46; 161, 162) and/or a modification of device operation based on the machine-readable data;
control, via the interface, the transfer and/or the modification in accordance with the determined at least one schedule (151, 152);
wherein the processing system (60; 172; 211, 212) is operative to:
execute a scheduler (151, 152) to determine the at least one schedule (151, 152); and
adjust parameter values of the scheduler (151, 152) during field operation of the processing system (60; 172; 211, 212) based on reports on execution of the transfer and/or the modification.
